(19) Europäisches Patentamt
European Patent Office
Office européen des brevets

(11) Publication number : 0 395 097 B1

(12) # EUROPEAN PATENT SPECIFICATION

(45) Date of publication of patent specification : **16.08.95 Bulletin 95/33**

(51) Int. Cl.$^6$ : **H03J 9/00,** H04N 5/44, H04Q 9/14

(21) Application number : **90108095.2**

(22) Date of filing : **27.04.90**

(54) **Remote control system for audio/video devices.**

(30) Priority : **27.04.89 JP 108852/89**
**20.12.89 JP 330577/89**

(43) Date of publication of application : **31.10.90 Bulletin 90/44**

(45) Publication of the grant of the patent : **16.08.95 Bulletin 95/33**

(84) Designated Contracting States : **DE FR GB**

(56) References cited :
**EP-A- 0 223 311**
**DE-A- 3 106 427**

(56) References cited :
**GB-A- 2 197 104**
**FUNKSCHAU, no. 17, 1987, München, pp. 20-24; Herbert Hafner: "Von der Fernbedienung zur Lernbedienung"**

(73) Proprietor : **MATSUSHITA ELECTRIC INDUSTRIAL CO., LTD.**
**1006, Oaza Kadoma**
**Kadoma-shi, Osaka-fu, 571 (JP)**

(72) Inventor : **Goto, Takashi**
**46-16, Muranohigashimachi**
**Hirakata-shi, Osaka-fu (JP)**

(74) Representative : **Eisenführ, Speiser & Partner**
**Martinistrasse 24**
**D-28195 Bremen (DE)**



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention generally relates to a apparatus for remote-controlling a plurality of stations (mainly audio/video devices) connected with an information transmission path over the wireless using infrared rays and so on, and a method of remote-controlling them.

### DESCRIPTION OF THE PRIOR ART

Conventionally when a plurality of stations connected with an information transmission path are remotely controlled over the wireless using infrared rays and so on, the following arts were used.

(1) The controlled device was determined in advance on the side of the transmitter. The transmitter transferred with respect to the remote control receiver the data including a code for specifying the controlled device. Such a transmitter is discribed in e.g. DE-A- 31 06 427.

(2) The respective stations effected the individual controlling operations by the use of the remote control data code string of a decodable code system.

(3) When a plurality of maker manufactured stations were controlled by a set of remote control transmitter, remote control codes of the other markers caused the remote control transmitter to learn them (remote control with a learning function attached to it: learning remote control) so as to effect the coping operation, as shown in FUNKSCHAU, No. 17, 1987, Munich, Germany, HERBERT HAFNER "Von der Fernbedienung zur Lernbedienung", pages 20 to 24.

(4) A remote controlling apparatus which had a specific code system of the whole system connected by the information transmission path was used to effect the controlling operation of the respective stations. Such type of remote controlling apparatus is disclosed in EP-A- 0223311 defining the closest prior art from which the invention proceeds as well as in GB-A-2197104.

(5) The data was discarded without any processing operation even if the remote control data code string addressed to the station of the other types were received by the remote control signal reception part of a certain station.

There were such problems as described hereinafter in the conventional arts described as described hereinabove.

(1) Since the type of the controlled devices was limited by the function on the side of the transmitter, the expansion property was inferior, so that the coping operation could not be effected when the new device has been added into a certain system.

(2) The general - J remote control (a plurality of types of stations: for example, the remote control which could control both the television and the VTR) transmitter basically could control only the stations manufactured by the same maker.

(3) When the learning remote control put into practical use in recent years (remote control which could learn the remote control signals of the stations of the other makers and the other types) was used, the stations manufactured by the different makers could be controlled, but the operation of learning the remote control signals for the station control use of the other makers were required, with a difficulty that the operation was hard to effect to those who did not know the mechanism nor the electricity. Also, since the remote control signals of the other makers were backed up in memory with the battery, there were cases where the battery was consumed when the remote control was left as it was without being used for a long period of time, and the contents were naturally erased so that the learning operation was required to be effected again.

(4) When a plurality of stations were controlled by the use of the conventional - J remote control and learning remote, the remote control signals were required to be transmitted towards the remote control light receiving part of the respective stations which became the control objects, so that the controlling operation could be effected if an obstacle existed before the station which became the control target.

(5) When the respective stations were controlled by the use of the remote control apparatus which had a code system for the specified use of the whole system connected with the information transmission path, the remote control accompanied conventionally by each station could be used only for the station concerned, so that the new remote control transmitter for the exclusive use of the system was required to be purchased for the controlling of the other station by a set of remote transmitter.

SUMMARY OF THE INVENTIONN

Accordingly, an essential object of the present invention is to provide a system which is capable of controlling a plurality of stations connected with the information transmission path by one set of remote control apparatus transmitter.

In accomplishing these and other objects, the present invention provides a remote control system as characterized by the appended claim 1.

Further advantageous embodiments are defined in the subclaims.

An advantage of the remote control system of the invention is its capability of controlling a plurality of electronic devices connected with the information transmission path by a remote control apparatus transmitter.

In the remote control apparatus reception part of the present invention, a remote control mode having the information of a device to be controlled at present is stored so as to control which device the control information coming from the remote control transmitter is to be transferred to by way of the information transmission path. Also, in the remote control mode, the renewing operation may be effected by the data code string from the remote control transmitter and the remote control mode renewal notice frame from the other device by way of the information transmission path.

The receiver of the remote control apparatus in accordance with a preferred embodiment demodulates the remote control data code string received from the remote control transmitter so as to decode it. As a result, if the controlled station is its own station in a case where the remote control data format is a format in which the contents may be decoded even if the remote control data format is of its own company or of the other company, the corresponding controlling operation is effected. If the controlled station is the other one, the corresponding control content is converted into the standard command to compose the frame so as to send it to the controlled station by way of the information transmission pass. If the infrared signal of the remote control data code string sent from the remote control transmitter does not reach directly to the station the user wants to control, it is possible to effect the controlling operation.

Since the control contents are converted into the standard command and are sent in the sending operation as the information transmission path, the controlling operation may be controlled if the controlled station is the station made by the other company which cannot decode the remote control data code string sent from the remote control transmitter.

But the remote control signal transfer method of the above-mentioned embodiment has problems as follows.

1) The remote control transmitter and the remote control reception part are required to be made by the same marker. (Or the remote control reception part is required to decode the data code string transmitted from the remote control transmitter)

2) Only a function with the standard command of the communication system existing therein may be transferred to the other station.

A method for solving these problems is a remote control signal transferring method in accordance with a further preferred embodiment.

The receiver of the remote control apparatus of this further embodiment demodulates the remote control data code string transmitted from the remote control transmitting machine and light-received by the light receiving means and tried to decode the code by the data code processing means. The format conversion is effected so that the data code string of the remote control signal received may be transferred transmittingly in a case where it was impossible to effect the decoding operation (when the remote control signal of the other maker has been received, when the signal with the content being not registered in it has been received, and so on if the signal is the remote control signal of its own company) so as to send to all the stations connected with the information transmission pass by way of the information transmission pass with the information showing the type of the format of the remote control signal and the data code string of the remote control signal being provided as the data frame. When the received infrared ray remote control signal is of a business standard format (Household Electric Product Association format) in Japan, the transfer destination of the data frame is restricted so as to send onto the information transfer pass by the use of a remote control signal transfer method, because the maker code is defined on the infrared remote control signal.

Each station which has received the frame transferred by the method decodes the reception data by the use of a remote control method so as to control the station by the given processing operation. As the result, when the station which has received the remote control data code string sent from the remote control transmitter cannot decode the contents or when the standard command does not exist if the content can be coded, the transmission transferring operation is effected to the other station by way of the information transmission path, so that the user may control the desired station.

## BRIEF DESCRIPTION OF THE DRAWINGS

These and other objects and features of the present invention will become apparent from the following description taken in conjunction with the preferred embodiment thereof with reference to the accompanying drawings, in which;

Fig. 1 is a block diagram of a device including a remote control apparatus reception part;
Fig. 2 is a flow chart of a remote control signal reception processing procedure;
Fig. 3 is a block diagram in one embodiment of a system realizing a remote control method;
Fig. 4 (a) is a sequence chart of the device selection key processing of the remote control method;
Fig. 4 (b) is a sequence chart of the device control key operation processing of the remote control method;
Fig. 4 (c) is a sequence chart of a device panel operation processing of the remote control method;
Fig. 5 is a block diagram for carrying remote control methods;
Fig. 6 is a block diagram of an information communication system;
Fig. 7 is a model chart in one example of the format of the remote control data and the data transmitting on the information transmission pass;
Fig. 8 is a model chart showing the construction of an infrared ray remote control signal;
Fig. 9 is a processing flow chart for carrying out a remote control signal transfer method;
Fig. 10 is a model chart showing a data conversion example in a case where the remote control signal transfer method has been applied;
Fig. 11 is a processing flow chart for carrying out a further remote control signal transfer method;
Fig. 12 is a model chart showing the data conversion example in a case where the further remote control signal transfer method has been applied;
Fig. 13 is a block diagram for carrying out still a further remote control signal transfer method;
Fig. 14 is a model chart showing one example of a station address table used in the remote control signal transfer;
Fig. 15 is a processing flow chart for carrying out the remote control signal transfer method;
Fig. 16 is a block diagram for carrying a further remote control method;
Fig. 17 is a processing flow chart for carrying out the further remote control method;
Fig. 18 is a model chart showing the basic construction of a communication system to which the present invention is applied; and
Fig. 19 is a model chart showing the frame to be used in the communication system to which the present invention is applied.

## DETAILED DESCRIPTION OF THE INVENTION

Before the description of the present invention proceeds, it is to be noted that like parts are designated by like reference numerals throughout the accompanying drawings.

One preferred embodiment of the present invention will be described hereinafter in detail with reference to the drawings. The embodiment of the present invention will be divided into the following nine sections.

Section 1 Summary Description of the System

(a) Definition
(b) Basic construction of the system
(c) Frame form and basic communication procedure

Section 2 Detailed Description of a first embodiment

(a) Construction of the embodiment
(b) Operation

Section 3 Detailed Description of a second embodiment

(a) Construction of the embodiment
(b) Operation

Section 4 Detailed Description of a third embodiment

(a) Construction of the embodiment
(b) Operation
(c) Description of the concrete example of the embodiment

Section 5 Detailed Description of a fourth embodiment

(a) Construction of the embodiment
(b) Operation
(c) Description of the concrete example of the embodiment

Section 6 Detailed Description of a fifth embodiment

(a) Construction of the embodiment
(b) Operation

Section 7 Detailed Description of a sixth embodiment

(a) Construction of the embodiment
(b) Operation
(c) Description of the concrete example of the embodiment
Each section will be described hereinafter.

Section 1 Summary Description of the System

(a) Definition

The system described here is an audio video system with an audio video device constructed mainly as a station. The audio video system is composed of an audio video device group which is connected mutually by a communication system provided with a transmission property and a code independence property. The information is transmitted as a unit of variable length called frame. A physical mechanism which transmits and receives the information is called a communication control apparatus (which is called a communication control part in a case where it is built-in in the audio video device). A communication circuit which is adapted to carry the information from a certain communication control apparatus to the other communication control apparatus. The basic terms necessary enough to understand the following portions of the present specification will be briefly described with reference to Figs. 18 and 19.

* Station 1002 through 1005: A device which is connected with the information transmission path 1001 and has a data communication function with the other station.
* Master: A station which has a control right of the communication system.
* Slave: A station which is specified by the master and has a duty to answer with respect to the master.
* Transmitter: A station which is adapted to transmit the data placed within the message field in the frame.
* Receiver: A station which is adapted to receive the data placed within the massage field in the frame.
* Light sequence: A sequence which is adapted to transmit the command and the data with respect to the slave with the master becoming the transmitter. There are two types: a light command sequence and a light data sequence.
* Lead sequence: A sequence of collecting the data from the slave with the master becoming the receiver.
* Frame 1110: A unit of the information to be transmitted from a certain station to the other station. This is composed of a header field, a master field, a slave field, a control field, and a message field.
* Command frame: A frame with the contents of the message field being composed of a command.
* Data frame: A frame with the contents of the message field being composed of data.
* Command: A data code string to be transferred by the command frame. The processing contents for the station, which has received it, to carry out are unificatively defined with the whole system. The processing contents for the station, which has received the data, to carry out depend upon the station which has received it.
* Mode bit 1112: This effects a distinguishing operation of the transfer speed of the frame and the number of the transferable bytes of the messages.
* Header field 1125: A region where the instructions of the start of the frame and the discrimination of the mode of the frame are effected.

* Master field 1126: A region where the address of the master is presented.
* Slave field 1127: A region for presenting the address of the slave. It is specified by the master.
* Control field 1128: A region where the meaning of a transmission direction of the message field in the frame, of the contents described in the message field, and the lock controlling operation are effected.
* Message field 1129: This is a data region where the message is transmitted. In this region, it is possible to continuously transfer a plurality of blocks with eight bits of data bit 1121, one bit of end of data bit 1122, one bit of parity bit 1123, and one bit of ACK bit 1124 being provided as one block.
* Arbitration: A collision control for determining a priority right in a case where a plurality of stations have tried the transmission start of the frame at the same time. It is carried out during the periods of the header field 1125 and the master field 1126.
* Lock control: This is a function with which the master specifies with respect to the slave. Once the slave is locked, the frame of such contents as change the condition of the slave from the other master can be received no longer before the locking is released.
* Remote control data code string: A data code string showing which key of the remote control transmitter has been depressed.

(b) Basic construction of the system

Fig. 18 shows the basic construction of the audio video system to which the present invention has been applied. The information transmission path 1001 of one system has a plurality of stations 1002, 1003, ..., 1005, which are provided with a communication control part, connected with respect to one another. Each station has audio video devices and so on such as VTR, TV, CD player and so on provided as centers. No problems are caused if the station except for audio video device such as telecontrol apparatus or the like for controlling the audio video system is connected. Also, the system has no central control apparatus which is adapted to control the whole operations concentratedly.

(c) Frame form and basic communication procedure

In the embodiment of the present invention, an internal standard norm defined by the document [84(Secretariat)86 I, II Draft - Domestic digital Bus] (hereinafter referred to as [84(Secretariat)86 I, II Draft - Domestic digital Bus] issued by the [International electrotechnical commission] is applied as one example. In this paragraph, the frame form and the basic communication procedure which are defined in the international standard norm will be described. The construction of the frame is shown in Fig. 19. The frame 1110 is composed of a header 1125, a master field 1126, a slave field 1127, a control field 1128, and a message field 1129. The header 1125 is composed of a start bit 1111 showing the start of the frame and a mode bit 1112 for transferring the mode. The master field 1126 is composed of a 12 bits of master address bit 1113 and a 1 bit of parity bit 1114. The slave field 1127 is composed of a 12 bits of slave address bit 1115, a 1 bit of parity bit 1116 and a 1 bit of ACK bit 1117. When the station specified into the slave exists, there is a duty for returning the affirmative reply with respect to the master by the ACK bit 1117 of the slave field.

The construction method of the master address bit 1113 and the slave address bit 1115 are common, with the most significant 4 bits being of a service type, the intermediate significant 5 bits being of a device type, and the least significant 3 bits being of a device numeral. In the [84(Secretariat)86 I, II draft - Domestic digital Bus], the <AVC service> only is defined as the service type with the value thereof being "0001". In the device type, the type of the various AV devices is assigned, and some of the assignments are shown in Table 1. The device numeral discriminates among the device types when the same device type exists in the same communication system of a plurality of sets. Generally the device types are sequentially assigned from the "000".

Table 1

| | Device Type |
|---|---|
| 00000 | VIDEO MONITOR |
| 00001 | AUDIO AMPLIFIER |
| 00010 | SWITCH BOX |
| 00011 | not defined |
| 00100 | VIDEO TAPE RECORDER |
| 00101 | VIDEO TUNING SYSTEM |
| 00110 | VIDEO DISK PLAYER |
| 00111 | CAMERA |
| • | |
| • | |

The master continuously transfers the roll field 1128 and its subsequent when it has received the affirmative answer by the ACK bit 1117. The master suspends the transfer of the frame when the negative reply has been received. The control field 1128 is composed of a 4 bits of control bit 1118, a 1 bit of parity bit 1119 and a 1 bit of ACK BIT 1120. The control bit 1118 is a region where the meaning of the transfer direction of the message field 1129 in the frame, of the contents described in the message field, and the lock controlling operation are effected. The contents of the control field are shown in Table 2.

Table 2

| HEX | Contents of CF | Lock Function |
|---|---|---|
| 0 | read slave status | not locked |
| 1 | not defined | |
| 2 | read slave status | lock |
| 3 | read data | lock |
| 4 | read lock address (M,L) | not locked |
| 5 | read lock address (H) | not locked |
| 6 | read slave status | unlock |
| 7 | read data | unlock |
| 8 | write memory address | lock |

| | | |
|---|---|---|
| 9 | not defined | |
| A | write command | lock |
| B | write data | lock |
| C | not defined | |
| D | not defined | |
| E | write command | unlock |
| F | write data | unlock |

The slave returns the affirmative reply to the master by the ACK bit 1120 when the control of the contents specified by the control bit 1118 is acceptable. The slave returns the negative reply when the control thereof is not acceptable. The master advances to the region of the message field 1129 after the master has received the affirmative reply by the ACK bit 1120. When the master has received the negative reply, it suspends the transfer of the frame. The message field 1129 is composed of a plurality of blocks, with the block being composed of a 8 bit of data bit 1121, a 1 bit of end of data bit 1122 showing the final data bit of the message field, a 1 bit of parity bit 1123 and a 1 bit of ACK BIT 1124. The station specified as the receiver by the control bit 1118 returns to the transmitter the affirmative reply or the negative replay with the ACK bit 1124 every time the data bit 1122 is received by 1 byte. The transmitter which has received the negative reply suspends the transferring operation of the message field in that place.

In this system, all the stations 1002 through 1005 have a right to become the master, and may specify the slave to control the transmission start of the frame 1110 and the transmission timing. Although all the stations 1002 through 1005 has a right to become the master so as to start the transmission of the frame 1110, the information transmission pass 1001 can be monopolized only by a certain one master at the same time. Therefore, when a plurality of masters have tried to transmit the frame at the same time, the arbitrating operation is necessary to be effected to decide the priority right. The slave has a duty to return a reply (ACK bit) with respect to the master by one unit of station address-specified by the slave bit 1115 within the slave field 1127 of the frame 1110 the master has transmitted. The discrimination between the transmitter and the receiver is defined at the control field 1128 in the frame 1110. At the standing point of one station, in the transmission of the frame 1110, there is a possibility of providing four kinds of (a) master transmitter, (b) master receiver, (c) slave transmitter, and (d) slave receiver.

Section 3 Detailed Description of a first embodiment

(a) Construction of the embodiment

Fig. 1 shows a block diagram of the device including a remote control reception part. Reference numeral 400 is a remote control signal reception part. Reference numeral 401 is a light receiving means for receiving the signal transmitted by the infrared rays so as to convert them into electric signals, reference numeral 402 is a demodulation means for demodulating into the data code string from the signal converted into the electric signal by the light receiving means 401, reference numeral 403 is a code decoding means for decoding the contents of the data code string, reference numeral 404 is a remote control mode storing means for storing the present remote control mode, reference numeral 405 is a key code comparing means for judging whether the contents of the data code string are the command of the device control or are the command for renewing the remote control mode, reference numeral 406 is a remote control mode comparing means for deciding which device is controlled by the contents of the remote control mode. Reference numeral 410 is a communication control part for communicating with the other device through the information transmission path 1001. Reference numeral 411 is a communication processing means for effecting the processing operation for the communication described in the paragraphs of the frame construction and the basic communication procedure, reference numeral 412 is a frame generating means for transferring into the information transmission path, reference numeral 413 is a frame decoding means for decoding the contents of the frame transferred from the information transmission path. Reference numeral 430 is a device function part which is the device main body for VTR, television and so on. Reference numeral 431 is a function part for realizing the function of the device main body, reference numeral 432 is a device system controller in charge of the control operation of the whole device, reference numeral 433 is a display means for displaying the various types of conditions and so on, reference numeral 434 is an operation input means for the user to effect the various types of operations. Reference numeral 420 is a device control signal generating means for generating the control signal for controlling the device function part 430 from the command of the device control sent from the remote control and the information transmission path.

(b) Operation

The operation of the remote control reception part will be described hereinafter.

The remote control signal transmitted by infrared rays from a remote control transmitter is received by the light receiving means 401, is converted into the electric signal and thereafter is transferred into the demodulating means 402. The signal is demodulated till the stage corresponding to the data code string generated by the cord generating means 104 of the remote transmitter, and is transferred into the code decoding means 403.

The processing operation and its subsequent within the code decoding means 403 will be described in each processing step with reference to the flow chart shown in accordance with the remote control signal reception procession procedure of Fig. 2.

(Step 501)

In this step, a maker code parity and a command data parity of the data code string which has been transferred into the code decoding means 403 are checked. It is examined that the transmission is free from errors, and thereafter, the contents of a device code and a command/data code are decoded, a remote control key code corresponding to the data code string is reproduced so as to transfer it into the key code comparing means 405.

(Step 502)

If the key code showing which key of the remote control transmitter has been depressed is examined only to find that it is a key code showing that each type of device selection keys have been depressed, the information thereof is transferred into the remote control mode storing means 404 so as to advance to the step 503. Also, when the key code is one except for the respective types of device selection keys, the step goes to the step 505.

(Step 503)

In the step, the device code corresponding to the contents of the key code showing the depressed device selection key is stored in the remote control mode storing means 404 as the new remote control mode. Thereafter, a control order is transferred with respect to the device corresponding to the new remote control mode.

(Step 504)

In a case where a plurality of remote control reception parts exist in a system connected with the present reception part being connected with it, it is necessary to unify the remote control modes stored in all the remote control reception parts. In order to perform the remote control mode renewal procedure performed in the step 503 with respect to all the remote control reception parts in this step, the remote control mode renewal notice frame is generated by the frame generating means 412 so as to transmit it into all the remote control reception parts by way of the information transmission path 1001 through the processing of the communication processing means 411.

(Step 505)

When the key code transferred from the remote control transmitter is a device control key except for the device selection key, a remote control mode comparing means 406 effects the comparison judgment as to whether the remote control mode stored in the remote control mode storing means 404 at present is a mode for controlling a device function part 430 to which the remote control receiver belongs or is a mode for controlling the other device. When the remote control mode stored in the remote control mode storing means 404 at present is a mode for controlling its own device, the contents of the key code are transferred into the device control signal generating means 420 so as to move to the step 506. When the remote control mode is a mode for controlling the other device, the contents of the key code is transferred into the frame generating means of the communication control part 410 so as to move to the step 507.

(Step 506)

In this step, a signal for controlling the device function part 430 is generated by the device control signal generating means 420 in accordance with the contents of the transferred key code so as to transfer it into the device system controller 432. The processing/operation in this step and its subsequent depend upon the function of the device system controller.

(Step 507)

In this step, the contents of the remote control mode stored in the remote control mode storing means 404 and the contents of the key code transferred from the remote control transmitter are transferred into the frame generating means 412, a frame for transferring the control order with respect to the device which has become the control object is generated so as to be transferred into the device by way of the information transmission path 1001 through the processing of the communication processing means 411.

The processing sequence of the data code string transferred from the remote control transmitter is effected as described hereinabove. Except for the processing, there are cases where the frame which is similar to the remote control mode renewal notice frame transferred with respect to the other remote control reception part in the step 504 may be transferred from the other remote control reception part. The processing procedure in this case will be described hereinafter.

The remote control mode renewal notice frame transferred from the other remote control reception part is transferred into the frame decoding means 413 through the communication processing means 411. When the frame is judged to be the remote control mode renewal notice frame by the frame decoding means 413, the contents thereof are transferred into the device control signal generating means 420 so as to renew the contents of the remote control mode storing means 404 into the value of the new remote control mode.

Section 3 Detailed Description of a second embodiment

(a) Construction of the embodiment

Fig. 3 shows a block diagram in one embodiment for realizing the remote control method of the present invention. Reference numeral 601 is an information transmission path for transmitting the frame with the respective devices being connected. Reference numerals 610, 620, 630 are devices for constituting this system. Reference numerals 611, 621, 631 are communication control parts for effecting the frame transfer using the information transmission path 601, and are equivalent to the communication control part 410 in Fig. 1. Reference numerals 616, 626, 636 are remote control reception parts. Although all the devices 610, 620, 630 are shown to respectively have remote control reception parts 616, 626, 636 in the block diagram, it is possible to control all the devices constituting the system through the transferring operation of the data if at least one remote control reception part exists in one system. Reference numeral 640 is a remote control transmitter, which is adapted to control all the devices connected with the system by the remote control transmitter 640. Thus, the remote control method to be described hereinafter realizes the combination of the remote control transmitter and the remote control reception parts described hereinbefore.

(b) Operation

The operation of the remote control method of the present invention will be described hereinafter. The remote control method is composed of the following three sequences.

(1) Device selection key processing sequence
(2) Device control key processing sequence
(3) Device panel operation processing sequence

(1) Device selection key processing sequence

The operation of the device selection key processing sequence will be described hereinafter with reference to Fig. 4 (a). The operation in a case where the device i has been selected by the device selection key of the remote control transmitter 640 will become as follows.

(Step 701)

The data code string by the infrared rays emitted from the remote control transmitter 640 reaches to the remote control reception parts 616, 626, 636. The operation step will be described with the remote control reception part 616 of the device 1 being provided as an example.

(Step 702)

In accordance with the operation contents in the remote control reception part 616, the remote control the it has is renewed into the mode of the device i.

(Step 710) through (Step 712)

The frame of the remote control mode renewal notice will be sequentially transferred with respect to the all the other remote control reception portions connected with the system. The reason why this step is carried out is that the remote control mode should be positively renewed even when the other remote control reception part could not receive the remote control signal of the step 701 because of some factors or other.

(Step 706) through (Step 708).

The remote control reception part which has received the remote control mode renewal notice frame renews into the mode of the device which has been informed of the contents of the remote control mode storing means.

All the other remote control reception parts carry out the processing of the contents similar to those of the above described processing step. In the above described processing step, a case where the remote control mode renewal notice frame is transferred from the other remote control reception part to doubly renew the remote control mode is caused after the concepts of its own remote control mode storing means has been renewed by the data code string transferred from the remote control transmitter, but nothing interferes now that the contents to be renewed are the same to both.

The above described processing step is carried out so that the contents of the remote control mode storing means of all the remote control reception parts are renewed into the mode for controlling the device 620.

(2) Device control key processing sequence

The operation of the device control key processing sequence will be described hereinafter with reference to Fig. 4 (b). The operation in a case where the device control key has been operated by the remote control transmitter 640 when the remote control mode is the mode of the device 620 is as follows.

(Step 720)

The data code string reaches the remote control reception parts 616, 626, 636 by the infrared rays emitted from the remote control transmitter 640.

(Step 721), (Step 730)

Since the remote control mode at present is a mode of controlling the device 620, in the reception part 616 the controlling operation is not effected upon its own device so as to transfer into the device 620 a frame with a device control order corresponding to the key code demodulated from the received data code string being provided as the contents.

(Step 722)

Since the present remote control mode is a mode for controlling its own device in the remote control reception part 626 of the device 620, the contents of the control order of the data code string received from the remote control transmitter 640 are decoded to generate the device control signal to transfer it into the device system controller 622 of its own device so as to effect the given control.

(Step 723), (Step 724)

Any controlling operation is not effected upon the its own device as in the step 721 so as to transfer into the device 620 the frame with a device control order corresponding to the key code demodulated from the received data code string being provided as the contents.

When the above described processing step is all carried out, in the device 620, both the device control signal generated by way of the remote control reception part within the device 620 from the remote control transmitter 640, and the device control signal generated by the frame with the device control order transferred by way of the information transmission path from the other remote control reception part being provided as the contents are inputted into the device system controller 622. In this case, although the processing contents are different in the contents of the control signal, the proper processing corresponding to the control signal is effected within the device system controller.

(3) Device panel operation processing sequence

Finally the operation of the device panel operation processing sequence will be described with reference to Fig. 4(c).

(Step 740), (Step 741)

When the panel operation (for example, a disk is inserted into the device 630, and so on) of the device 630 has been effected, the device system control roller 632 detects the operation thereof to renew the remote control mode of the remote control reception part 636 within the its own device into a mode of controlling the device 630.

(Step 750) through (Step 752)

The remote control mode renewal notice frame is transferred with respect to all the other remote control reception parts connected with the system to notify that the remote control mode has been renewed into the mode for the controlling the device 630.

(Step 742) through (Step 744)

In the respective remote control reception parts, the remote control mode is renewed into a mode for controlling the device 630.

Section 4 Detailed Description of a third embodiment

(a) Construction of the embodiment

Fig. 5 shows a block diagram of the station to which the present invention is applied. Reference numeral 2130 is an information transmission route for effecting the transmission of the information with each station constructing the AV system being connected. Reference numeral 2100 is a remote control signal reception part which is a portion the same as the remote control reception parts 2100 m-1 through 2100 m-n in the whole construction view shown in Fig. 6. Reference numeral 2101 is a light receiving means for converting the received infrared signal into the electric signal, reference numeral 2102 is a demodulation means for converting the electric signal which has been converted by the light receiving means 2101 into the data code string in accordance with the specification defined in advance, reference numeral 2103 is a data code processing means which divides the data code string generated by the demodulation means 2102, compares the contents with the previously defined data code table so as to examine whether or not the standard command corresponding to the reception data exists, reference numeral 2104 is a format converting means for effecting the format conversion necessary for the transfer onto the information transmission path 2130 the reception command by the use of the standard commend when the standard command is judged to exist after the comparison thereof with the data code table.

Reference numeral 2110 is a communication control part which is the portion the same as the communication control parts portions 2110 m-1 through 2110 m-n in the entire block diagram shown in Fig. 6. Reference numeral 2111 is a communication control means for effecting electric physical control so as to effect the data communication with the other station by way of the information transmission path 2130, reference numeral 2112 is a frame generating means for generating a frame of a type necessary for sending the data of the information transmission path 2130 by way of the communication control means 2111.

Reference numeral 2120 is a device function part, which is a portion corresponding to the device function parts 2120 m-1 through 2120 m-n in the entire block diagram shown in Fig. 6. Reference numeral 2121 is an original function part (for example, tuner, deck player part if it is VTR) of the station, reference numeral 2122 is a system control means for controlling the function operation of the station.

(b) Operation

The operation of the receiver of the remote control apparatus will be described in detail with reference to the processing flow chart of Fig. 9. The processing contents to be described hereinafter are carried out by the light receiving means 2101, the demodulating means 2102, the data code processing means 2103 and the format converting means 2104 in the block diagram of Fig. 5.

(Step 2501)

The processing routine 1 shown in Fig. 9 is normally carried out. The step 2501 which is the initial step is processed by the light receiving means 2101 so as to check whether or not the remote signal has been received. In order to check it, a method of inspecting whether or not the remote control signal converted into the electric signal from the infrared ray signal has been outputted into the output part of the light receiving means 2101 is general. When no signal has been outputted to the output of the light receiving means 2101, the processing operation of the processing routine 1 is finished on the assumption that no remote control signal has been received, and the operation returns to the start. When some signal has been outputted into the output part of the light receiving means 2101, it is judged that the signal of the infrared ray remote control has been received, and the step goes to the step 2502.

(Step 2502)

The step 2502 judges whether or not the received infrared ray remote control signal may be demodulated. Here "demodulation" means that the signal converted into the electric signal by the light receiving means 2101 after the reception is inverted into the data code string of the "0" or "1" by the demodulation means 2102 in accordance with the previously determined rule.

The structure example of the infrared ray remote control signal is shown in Fig. 8 for the reference so as to briefly explain the meaning of the demodulation. Generally the infrared ray remote control signal is composed of the combination of a high level signal (+5V by way of example of TTL level signal) to continue for the time of integer multiple of a certain unit time "T" and a low lever signal (OV by way of example of TTL level signal). In the example of Fig. 8, when an electric signal of retaining the high level continuously for the time period of "8T", and thereafter retaining the low level continuously for the time period of "8T" has been inputted, the demodulation is effected as the "header" meaning the head of the frame of the infrared ray remote control signal. Also, when an electric signal of retaining the high level continuously for the time period of "2T", and thereafter retaining the low level continuously for the time period of the "2T" has been inputted, the demodulation is effected as the bit "0". Similarly, when an electric signal of retaining the high level continuously for the time period of the "2T", thereafter retaining the low level continuously for the time period of "6T" has been inputted, the modulating operation is effected as the bit "1". When the conversion may be effected into the data code string of the combination of the "0" and "1" from the received electric signal by the combination of the unit time period "T" defined previously and the signal of some times as much as the unit time as in the example and the unit time, it is called modulatable. Also, it is judged to be impossible to be demodulated when the signal contrary to the contents previously defined has been received.

At the step 2502, when the impossible signal for the demodulation has been received, it becomes impossible to process the succeeding step, so that the processing is returned to the start of the processing routine 1 after the completion of the processing. When it has been judged that the demodulation may be effected, the demodulation processing operation is effected to advance into the following step.

(Step 2503)

At the step 2503, it is judged whether or not the contents of the signal to be modulated by the demodulation means 2102 may be decoded. In the decode of the contents, the data code string demodulated by the demodulation means 2102 is divided into the bit unit defined previously. When the contents of the respective words (the bit string divided into the unit bit) agree with the contents of the previously defined data table, it is possible to decode the contets.

For reference, the remote control format example is shown in the (1), (2) of the data format example of Fig. 7. The remote control format example 1 of the (1) is a signal format (hereinafter it is referred to as A company format) used in the infrared ray remote control corresponding station of a certain company at the comparatively early stage. Reference numeral 2301 is a header showing the head of the frame, reference numeral 2302 is a 5 bit of device code for the discrimination of the station, reference numeral 2303 is a 6 bit of data code showing the contents of the control command. Reference numeral 2304 is an inversion bit of the 5 bit of device code, which is also 5 bits as in the device code, reference numeral 2305 is an inversion bit of the data code, which is also 6 bits as in the data code, reference numeral 2306 is a 1 bit of check bit for detection of the data transmission error by the infrared ray.

The remote control format example 2 of the (2) is a recommendation format (hereinafter referred to as Household Electric Product Association) stipulated in the "Error Preventing Measure For Infrared Ray Remote Control Household Electric Product" (issued in July, 1987) by the Foundation-Household Electric Product Association. In order to prevent the signal of the infrared ray remote control transmitting machine of a certain company from error-operating the station of the other company, the Household Electric Product Association Format is recommended to be used when the remote control signal using the infrared ray is transmitted. Reference numeral 2311 is a header showing the head of the frame, reference numeral 2312 is a 16 bit of maker code for discriminating the makers, reference numeral 2313 is a 4 bit of parity code for preventing the reception error of the maker code, reference numeral 2314 is a 12 bit of device code for discriminating the stations and so on. Reference numeral 2315 is a command/data code for transmitting the control command and the data, which is capable of a plurality of byte transfer with 8 bits as a unit. Reference numeral 2316 is a parity code for preventing the reception error of the device code and the command/data code.

In the step 2503, the data code string is divided into the bit unit previously defined as in the format example so as to check whether or not the contents corresponding to respective codes are defined in the table. It is judged that the contents may be decoded when the corresponding table exists, but the contents may not be decoded in cases except for it. In the receiver of the remote control apparatus of the third embodiment, when the contents has been judged to be decoded at the step 2503, the step advances to the next step 2504. Since the successive processing operation cannot be carried out when the contents has been judged to be impossible to be decoded, the received data are scraped so that the processing routine returns to the start thereof.

(Step 2504)

At the step 2504, the contents of the reception signal which has been judged to be decoded at the step 2503 are checked so as to judge whether the received infrared ray remote control signal is a command addressed to one's station or a command addressed to the other station. Through the consideration of the judgment in correspondence to the A company format and the Household Electric Product Association format, the judgement is effected with reference to the device code 2302 in the case of the A company format, and the judgement is effected with reference to the maker code 2312 and the device code 2314 in the case of the Household Electric Product Association format.

When the judgement has been effected to be addressed to one's station at the step 2504, the data received without any processing are scraped at the data processing means 2103 so that the processing returns to the start thereof. The reason why any processing is not effected is that the processing is carried out at the system control means 2122 when the signal is the command addressed to one's station, because the output of the demodulating means 2102 is transferred directly into the system control means 2122.

(Step 2505)

The contents of the portion equivalent to the station control command in the data code string of the infrared ray remote control signal which has been judged to be addressed to the other station at the step 2504 are compared with the contents of the previously defined standard command table so as to advance to the next step 2506 when the corresponding standard command exists. Since the corresponding operation cannot be effected in the remote control method of the present invention when the standard command corresponding to the standard command table does not exist, the received data code string is scraped so that the processing returns to the head.

The portion equivalent to the station control command in the data code string is the data code 2303 or a command/data code 2315 provided in the remote control format example of Fig. 7.

The standard command means a command defined in the [84(Secretriat)86 I, II Draft - Domestic digital Bus].

(Step 2506)

At the step 2506, the conversion is effected into the standard command by the respective judgement processing up to the step 2505 so as to carry out the (1) command conversion, (2) format conversion and (3) transfer processing of the infrared ray remote control data which are ensured to become transferable into the other station.

(1) Command conversion

The portion equivalent into the station control command in the data code string of the infrared remote control data, namely, the data code 3203 or the command/data code 2315 presented into the remote control format example of Fig. 7 is processed to be replaced into the command defined by the [84(Secretariat)86 I, II Draft - Domestic digital Bus]. Generally, in the infrared ray remote control data, the station control command is defined by one word or one byte, with the above described standard command is composed of 1 byte of opecode and 1 byte of or a plurality of byte operands.

(2) Format conversion

The first section in the embodiment of the present invention: The contents of the message field 1129 in the frame described in the paragraph of the form and the basic communication procedure of the (c) frame in the summary description of the system are defined in further detail in the [84(Secretariat)86 I, II Draft - Domestic digital Bus]. One example thereof is presented in the (3) and the (4) of Fig. 7. The message field 1129 in Fig. 19 is the same as the message field 1129 with the contents being defined as in Fig. 7 (4). The information to be transmitted at first is the routining information (information showing that the command is going to send to which subdevice of which station from which subdevice of which station) composed of a <BEGIN> code 2331, an operand 2332 of the <BEGIN>, a SSDA (SOURCE SUB-DEVICE ADDRESS) 2333, and a DSDA (DESTINATION SUB-DEVICE ADDRESS) 2334. Reference numeral SSDA 2333 is an address showing the start subdevice of the command, reference numeral DSDAS 2334 is an address showing the subdevice of the destination of the command. The actual command is transmitted next to the routing information. Here the standard command converted by the processing of the (1) command conversion is transferred in the form of the OPC (opecode) 2335 + OPR (operand) 2336. Therefore, the command received as the infrared ray remote control data is command-converted, is accommodated in this portion in the form of the OPC + OPR and is transferred. The final <END> code 2337 is a code showing the completion or the like of the command frame. Also, on the slave address 1115 and the DSDA 2334 showing the station address of the destination of the command, the contents of the device code 2302 and the device code 2314 in the infrared ray remote control data are converted into the address defined in the [84(Secretariat)86 I, II Draft - Domestic digital Bus], and are accommodated. These format conversion processing is carried out by the format converting means 2104. The data code processing means 2103 and the format converting means 2104 described hereinabove are generally processed by the software by the use of the microprocessor.

(3) Transfer processing

The command conversion processing and the format conversion processing are carried out so as to effect the re-configuration. This is the processing of transferring the other station control frame into the given other station by way of the communication control part 2110. Since the other transfer party and the transfer contents are already specified with the above described format conversion processing, these frames are transferred into the frame generating means 2112 so as to set the other paragraphs (mode bit 1112, master address 1113, control code 1118 and so on). Thereafter, the frame is transferred into the station destination by the way of the information transmission route 2130 by the function of the communication control means 2111.

Since all the processings of the third embodiment have been completed, the processing routine 1 is restored to the head thereof to prepare for the. reception of the next infrared remote control data.

(c) Description of the concrete example in the embodiment

For a better understanding, an illustration will be given with reference to the concrete example shown in Fig. 10. A case where the data of the A company format has been received will be described in an example in the following description.

As the example of the A company format, a case where the infrared ray remote control data shown in Fig. 10 (1) has been received will be taken into consideration. As the prerequisite of the following description, assume that (1) the infrared ray remote control signal received may be demodulated, (2) the infrared ray remote control data received may be decoded in contents, (3) the infrared ray remote control data received is not a command addressed to one's station, and (4) the standard command corresponding to the infrared remote control signal received exists. Therefore, the step moves to the step 2506 by the carrying out of the processing routine 1 so as to effect the following processing. Also, the reception data is <device code 2302> = 01011 (B), wherein the (B) means a binary representation. (Hereinafter the binary and the hexadecimal are represented (B) and (H) respectively).
It is <Data code 2303> = 100101 (B), wherein the device code and the data code are assumed to means "VTR1" and "PLAY". When the reception data is converted into the format of Fig. 7 (3) and (4) in accordance with the contents defined in the [84(Secretariat)86 I, II Draft - Domestic digital Bus], the respective data are determined as follows.

Although the mode bit 1112 depends on the function of the communication control means 2111, assume here that it is "mode 1". <Mode bit 1112> = 01 (B) Assume that one's station is a "Television 1", and <Master address 1113> = 100 (H). Since the other party of the transfer is a "VTR1", <Slave address 1115> = 120 (H). A method defined in the [84(Secretariat)86 I, II Draft - Domestic digital Bus] is used as the method of determining the address. ( See Table 1)

The control code 1118 is determined in accordance with the contents of Table 2.
<Control code 1118> = 1110 (B)

The BEGIN code 2331 through END code 2337 are accommodated in the message field 1129. Although the illustration is omitted from the BEGIN code 2331 among them, because the method of determining of DSDA 2334 is not necessary especially for the understanding of the present invention, the application of the definition of the [84(Secretariat)86 I, II Draft - Domestic digital Bus] becomes as follows.
<BEGIN2331> = BD (HD)
<OPR2332 of the BEGIN> = 54 (H)
<SSDA2333> = C8 (H)
<DSDA2334> = 20 (H)

The OPC2335 and OPR2336 corresponding to the data code of the A company format are determined as follows in accordance with the definition of the [84(Secretarisat)86 I, II Draft - Domestic digital Bus].
<OPC2335> = C3 (H)
<OPR2336> = 75 (H)

Finally, the END2337 meaning the completion of the frame is <END2337> = BE (H).
When the contents determined by the above described method, the frame after the format conversion is provided as in Fig. 13 (2) and the frame is transmitted into the destination station by way of the information transmission path.

Section 5 Detailed Description of a fourth embodiment

(a) Construction of the embodiment

As the construction of the station for embodying the receiver of this embodiment is the same as the construction of the station for embodying the remote control method described in Section 2, the description will be omitted.

(b) Operation

The operation of the receiver of the remote control apparatus will be described hereinafter with reference with the processing flow chart of Fig. 11. The processing contents to be described hereinabove is carried out by the light receiving light receiving means 2101, the demodulating means 2102, the data code processing means 2103 and the format converting means 2104 in the block diagram of Fig. 5.

(Step 2601)

Although the processing routine 2 shown in Fig. 11 is normally carried out, the step 2601 which is the initial step thereof is processed by the light receiving means 2101 so as to check whether or not the remote control signal has been received. Since the checking means and the processing method are completely the same as the above-described step 2501, the description of the processing method and so on are omitted.

When the remote control signal has not been received, the processing of the processing routine 2 is completed to return to the start. When the remote control signal has been received, the step advances into the step 2602.

(Step 2602)

At the step 2602, it is judged whether or not the signal of the received infrared ray remote control may be demodulated. Since the meaning of the "demodulation" and "possible demodulation" and the judgement method are completely the same as the above-described step 2502, the description of the processing method and so on are omitted.

At the step 2602, when the signal possible to be demodulated has been received, it becomes impossible to effect the processing of the successive steps, the processing is completed here to return to the start of the processing routine 2. When it has been judged to be possible to be demodulated, the demodulation processing operation is effected so as to advance to the next step.

(Step 2603)

At the step 2603, it is judged whether or not the contents of the signal demodulated by the demodulation means 2102 may be decoded. Since the meaning of the decoding of the contents and the contents decoding method are completely the same as the above-described step 2503, the description of the processing method and so on are omitted.

In the remote control method of this embodiment, when the content has been judged to be decoded at the step 2603, its subsequent processings become the same as the processing of the remote control method of the third embodiment, so that the description thereof is omitted.

When the contents has been judged to be impossible to be decoded at the step 2603, the step advances to the next step 2604.

(Step 2604)

At the step 2604, the (1) format conversion and the (2) transfer processing are effected so as to transfer to the other station, as the transparent (transmitting) data, the contents of the reception signal which has been . judged to be impossible to be decoded in the contents at the step 2603.

(1) Format conversion

The processing of the format conversion is effected within the format conversion means 2104. The procedure of the format conversion is classified into the following five processings.

Procedure 1: Extraction of the data to be transferred
Procedure 2: Division into the 8-bit unit
Procedure 3: Addition of the dummy bit
Procedure 4: Addition of the data classification, the format classification
Procedure 5: Construction of the frame

Procedure 1: Extraction of the data to be transferred

Only the data portion to be transmitted into the other station by way of the information transmission path is extracted from within the received infrared reception remote control data. Concretely, the header and the trailer are processed so as to be eliminated from the infrared remote control data received.

Procedure 2: Division into the 8-bit unit

A format which is not a system of 8-bit unit like 5 bits in the device code and 6 bits in the data code as in Fig. 7 (1), a format-which is a system of 8-bit unit (or may be easily re-divided into 8-bit unit), and so on are mixed in the code system of the infrared ray remote control data. But in the frame on the information transmission path, the format has the data transmitted in the 8-bit unit, so that the unit is converted into the 8-bit unit in the case of the code system which is not 8 bits in unit.

Procedure 3: Addition of the dummy bit

When the total number of the data of the received infrared ray remote control data is not the integral multiple of the 8 bits, the unit is divided into the 8-bit unit by the procedure 2, thus generating insufficient bit on the last byte. The dummy bit is added by the insufficient number of the bits, so that such processing as may be converted correctly into the 8-bit unit may be effected.

Procedure 4: Addition of the data classification and the format classification

The generation of the part of the data to be transmitted into the transparent has been completed by the above described procedures. But the station which has received the data as they are by way of the information transmission path cannot judge what data it has received. Thus, the <data classification> identifier for identifying what data it is is added so as to display what the remote control data is.

Furthermore, a <format classification> identifier for identifying which format of remote control data it is is added so as to display the type of the format.

Procedure 5: Construction of the frame

The data field part generated by the processings of the procedure 1 through the procedure 4 are transferred into the frame generating means 2112 of the communication control part 2120 so as to compose the frame to be transmitted into the information transmission route 2130. The processing of the format conversion is completed by the above described processing.

(2) Transfer processing

The re-configuration is effected by the execution of the command conversion processing and the format conversion processing. The other station control frame is transferred into all the stations connected with the information transmission path by way of the communication control part 2110.

Since all the processings of the fourth embodiment are completed, the processing routine 2 returns to the head thereof so as to prepare for the reception of the next infrared remote control data.

(c) Description of the concrete example in the embodiment

For further understanding, a concrete example will be described with reference to Fig. 12. In the following description, the reception of the data of the A company format will be described by way of example. A case where the infrared ray remote control data shown in Fig. 12 (1) has been received is taken into consideration. As the prerequisite for the following description, it is assumed that (1) the received infrared ray remote control signal may be demodulated, and (2) the received infrared ray remote control data cannot be decoded in the contents. Therefore, by the execution of the processing routine 2, the step advances to the step 2604 so as to carry out the next processing. Also, the reception data means <device code 2302> = 01011 (B), wherein the (B) is a binary representation. (Hereinafter the binary and the hexadecimal are represented (B) and (H) respectively).

Assume that <data code 2303> = 100101 (B). The concrete example of the step 604 will be shown hereinafter. The step 604 is processed by the following procedure as described in the paragraph of "(b) operation".

Procedure 1: Extraction of the data to be transferred
Procedure 2: Division into the 8-bit unit
Procedure 3: Addition of the dummy bit
Procedure 4: Addition of the data classification, the format classification
Procedure 5: Construction of the frame

Procedure 1: Extraction of the data to be transferred

The format of the infrared ray remote control data is composed as in the (1) and (2) of Fig. 7 as described in the description of the embodiment of the claim 11 of the present application, with headers 2301, 2311 and trailers 2307, 2317 except for data necessary for the station control being attached. They are attached for recognition of the head and the end of the frame of the infrared ray remote control data, and are portions unnecessary in a case where the transferring operation is effected by the use of the frame of the other format into the other station. As the first procedure of the format conversion, these headers 2301, 2311 and trailers 2307, 2317 are eliminated, and the portions (device code 2302, data code 2303, device code inversion bit 2304, data code inversion bit 2305, check bit 2306) necessary for the transferring operation into the other station are extracted.

Procedure 2 and Procedure 3: Division into 8-bit unit and addition of the dummy bit

A format which is not a system of 8-bit unit like 5 bits in the device code and 6 bits in the data code as in Fig. 7 (1), a format which is a system of 8-bit unit (or may be easily re-divided into 8-bit unit), and so on are mixed in the code system of the infrared ray remote control data. But in the frame on the information transmission path, the format has the data transmitted in the 8-bit unit, so that the unit is necessary to be converted into the 8-bit unit in the case of the code system which is not 8 bits in unit. A method of dividing the infrared ray remote control data of the above described A company format into the 8-bit unit is shown in the procedure (2) of Fig. 12. Here a method of arranging the device code 2302, the data code 2303, the device code inversion bit 2304, the data code inversion bit 2305 and the check bit 2306 in one row so as to divide it from the head 8 bits by 8 bits. Generally there are many cases where the infrared ray remote control data totaled in all do not become the multiple of the 8 bits. In this case, in order to cope with the cases, the dummy bits are accommodated by the number of the bits which is insufficient for the division into the 8-bit unit.
The dummy bit may be neither "0" nor "1". When all the data of the device code 2302 through the check bit 2306 are totaled in this example, it becomes 23 bits, which are insufficient for the division into the 8-bit unit. Thus, the dummy bit 2350 is accommodated into the portion of the insufficient bit. In this example, the "0" is accommodated in the portion of the dummy bit 2350.

Procedure 4: Addition of the data classification, the format classification

The generation of the portion of the data to be transmitted to the transparent has been completed by the above described procedures. But the station which has received the data as they are by way of the information transmission path cannot judge what data it has received. Thus, the <data classification> identifier for identifying what data it is is added. Here assume that <data classification> = 00 (H) → remote control data.

If the data is discriminated to be the remote control data by the <data classification>, there is not telling which format the remote control data comes from. Thus, the <format classification> identifier 2342 for recognizing which format the remote control data comes from is added. Here assume that <format classification> = 00 (H) → A company format, 01 (H) → Household Electric Product Association format. Since the contents described so far are assumed to be the A company format, the <format classification> = 00 (H).

The generation of the data field portion of the frame to be transmitted on the information transmission path has been completed by the above described procedure. To arrange it, [00] [00] [5C] [B4][6A] are provided (they are all hexadecimal) in the order of the <data 3> 2345 from the <data classification> 2341.

Procedure 5: Construction of the frame

The data field part generated by the processing of the procedure 1 through the procedure 4 is transferred into the frame generating means 2112 so as to effect the transfer processing.

These frames are transferred into the frame generating means 2112 and the other paragraphs (mode bit 1112, master address 1113, slave address 1115, control code 1118 and so on) are set. Thereafter, the frame is trans-ferred into all the stations connected with the information transmission path by way of the information transmission path by the function of the communication control means 2111.

Section 6: Detailed description of a fifth embodiment

(a) Construction of the embodiment

Fig. 13 shows a block diagram of the station to which the receiver of the remote control apparatus of this embodiment is applied.
Reference numeral 2130 is an information transmission path for the transmission of the information with the respective stations for constructing the AV system being connected.

Reference numeral 2100 is a remote control signal reception part, which is the same as the remote control reception parts 2100m-1 through 2100m-n in the whole block diagram shown in Fig. 6. Reference numeral 2101 is a light receiving means for converting the received infrared ray signal into the electric signals, reference numeral 2102 is a demodulating means for converting the electric signals converted by the light receiving means 2101 into the data code string in accordance with the specification previously defined, reference numeral 2103 is a data code processing means for dividing into the significant data unit the data code string generated by the demodulating means 2102, comparing the contents with the data code table previously defined so as to check whether or not the standard command corresponding the reception data exists, reference numeral 2104 is a format converting means for effecting the format conversion necessary for the transferring operation of the reception command on the information transmission path 2130 by the use of the standard command when the standard command has been judged to exit through the comparison with the data code table.

Reference numeral 2140 is a device search means for searching the station address of the station to be connected with the information transmission path 2130 and the maker code so as to effect the registering process, reference numeral 2141 is an address table for registering the station address searched by the device search means 2140 and the maker code, reference numeral 2142 is a maker code comparing means for comparing the maker code contained in the received infrared ray remote control data with the maker code to be registered in the address table so as to pass into the frame generating means 2112 the consistent station address.

Reference numeral 2110 is a communication control part, which is the same portion as the communication control parts 21110m-1 through 2110m-n in the whole block diagram shown in Fig. 6. Reference numeral 2111 is a communication control means for effecting the electric physical control for effecting the data communication with the other station by way of the information transmission path, reference numeral 2112 is a frame generating means for generating the frame of a form necessary to send the data into the information transmission path 2130 by way of the communication control means 2111.

Reference numeral 2120 is a device function part, which is a portion equivalent to the device function parts 2120m-1 through 2120m-n of the whole block diagram shown in Fig. 6. Reference numeral 2121 is an original function part (for example, a tuner or deck player part if it is VTR) of the station, reference numeral 2122 is a system control means for controlling the function operation of the station.

Fig. 14 is an address table for registering the station address of the station connected with the information transmission path 2139 and the maker code. Reference numerals 2150, 2151, ... are station address accommodating regions for accommodating the station address values of the station connected with the information transmission path 2130, reference numerals 2160, 2161, ... are maker code accommodating regions for accommodating the maker codes with the manufacturing maker of the station connected with the information transmitting path 2130 being coded. The maker codes 2160, 2161, ... correspond respectively to station addresses 2150, 2151, ... .

(b) Operation

The receiver of the remote control apparatus of this embodiment will be described in detail which reference with Fig. 13, Fig. 14 and Fig. 15.

The receiver of the remote control apparatus is processed down to the step 2604. In the step 2605, a method of determining the opposite station of the frame for transferring onto the information transmission path 2130 is provided.

In order to carry out the method, each station connected previously with the information transmission path 2130 is required to search which maker it is so as to register on the address table 2141. The method thereof will be described at first.

All the station addresses of the stations connected with the information transmission pass 2130 are searched (this processing is called "device search"). A method of setting the data for making this search will be described with reference to the construction of the frame of Fig. 19. A most significant mode which one's station can support at present is set in the mode bit 1112 of the header field 1125. Then, the address of the one's station is accommodated in the master address bit 1113 of the master field 1126. Then, a least significant value which is approved as the address is set in the slave address bit 1115 of the slave field 1127. Then, a control code "0000 (B)" ... "lead slave status" for reading the condition of the other station is accommodated in the control bit 1118 of the control field 1128 (see Table 2). The frame is sent into the information transmission 2130 by the above described setting. The "lead slave status" is used for the control field 1118, because the influences inconvenient for the other station are avoided by the "device search".

The processing of the frame sending is effected by the frame generating means 2112 and the communication control means 2111. When the affirmative reply is returned as the ACK bit 1117 of the slave field 1127 with respect to the frame, it is judged the station of the address of the set contents in the salve address bit 1115 is connected onto the information transmission path 2130, so that it is accommodated in the station address accommodation region 2150 (2151, ...) of the address table 2143. Then, the value of the address which has been set in the slave address bit 1115 in the above description is increased by one so as to effect the similar processing. By the repetition of the above described processings, the addresses of all the stations connected onto the information transmission path 2130 may be accommodated into the station address accommodation regions 2150, ... of the address table 2143.

Then, the maker code is inquired with respect to the station registered in the station address accommodation area 2150 of the address table 2141, and the reply contents thereof are registered in the maker code accommodation region 2160.

The construction of the frame for the inquires about the maker codes fs not defined here, because it is' defined particularly. Although the contents of the maker code may be defined anyway, the use of the maker codes defined as one portion of the Household Electric Product Association remote control format simplifies the later processing.

The inquiry processing about the maker code is effected on all the stations accommodated in the station address accommodation region and is accommodated in the respective corresponding maker code accommodated regions.

The above description shows the completion of the investigation of the station address and the marker code of all the stations connected with the information transmission path 2130. The processing procedure by this remote control apparatus will be described hereinafter.

Since the step 2704 from the step 2701 in the processing sequence chart of Fig. 15 is completely the same as the step 2604 from the step 2601 as described in Section 5, the description thereof will be omitted.

(Step 2705)

At the step 2705, it is judged whether the received remote control data is a Household Electric Product Association remote control format or the other format. When it is not the Household Electric Product Association remote control format, the processing as described in Section 5 is effected, because the following procedure cannot be applied. When it has been judged to be the Household Electric Product Association remote control, the step goes to the step 2706.

(Step 2706)

At the step 2706, the other transfer party of the frame is determined in accordance with the registration contents of the address table 2141.

In the case of the Household Electric Product Association remote control format, the maker code 2312 is defined in the contents of the frame. The contents of the maker code is standardized by the Household Electric Product Association. The maker code of the received infrared ray remote control data is compared with the maker code accommodated in the maker code accommodation regions 2160, ... of the address table 2143. When they are in conformity with each other, the station addresses accommodated in the station address accommodation regions 2150, ... corresponding to the maker code accommodation regions 2160, ... are assumed to become a slave address bit 1115 so as to hand over it, together with the data field generated by the step 2704, to the frame generating means 2112. A frame to be sent to the information transmission path 2130 is generated by the frame generating means 2112 so as to send it into information transmission 30 by way of the communication control means 2111. This processing is executed with respect to all the stations registered in the address table 2141 so as to send a frame which has the same data field with respect to all the station, whose maker codes being in conformity.

Section 7: Detailed description of a sixth embodiment

(a) Construction of the embodiment

Fig. 16 shows a block diagram of the station to which a remote control method of this embodiment is applied. Reference numeral 2130 is an information transmission path for effecting the transmission of the information with each station constituting the AV system being connected.

Reference numeral 2110 is a communication control part, which has the same portions as the communication control part 2110m-1 through 2110m-n in the whole block diagram shown in Fig. 6. Reference numeral 2111 has a communication control means for effecting the electric physical control in order to effect the data communication with the other station by way of the information transmitting path, reference numeral 2113 is a frame decoding means for analyzing the frame received by way of the communication controlling means 2111 from the information transmission path 2130 down to the usable form by the device function part 2120 to be described hereinafter.

Reference numeral 2120 is a device function part, which is portions corresponding to the device function parts 2120m-1 through 2120m-1 of the whole block diagram shown in Fig. 6. Reference numeral 2121 is the original function part (for example, a tuner or a deck player part if it is a VTR) of the station. Reference numeral 2122 is a system control means for controlling the functional operation of the station, reference numeral 2123 is a format inverse conversion means for converting it into a signal for controlling the system controlling means 2122 from the frame analyzed by the frame decoding means 2113.

(b) Operation

The operation of this remote control method will be described in detail hereinafter with reference to the processing flow charts Fig. 16 and Fig. 17. The processing contents to be described hereinafter are carried out within the format inverse converting means 2123 in the block diagram of Fig. 16. The contents described in this Section is a procedure in which the station which has received the frame transferred onto the information transmission path 2130 by the use of the remote control method as described in Section 5 effects the inverse conversion (format inverse conversion) of the frame into the contents wherein the system controlling means 2122 may be operated.

(Step 2801)

Although the processing routine 4 shown in Fig. 17 is ordinarily operated, the step 2801 which is the first step checks whether or not the frame has been received from the information path 2130. The check is carried out within the frame decoding means 2113. When the frame has not been received from the information transmission path 2130, the processing is completed without effecting the operation, and the processing routine 4 returns to the head thereof. When some frame has been received from the information transmission path 2130, the step advances to the step 280.

(Step 2802)

The construction of the frame the frame decoding means 2113 receives from the information transmission path 2130 is received in the shape of the format (5) of Fig. 12. At this time point, at first the contents of the control code 2325 are checked to judge whether the received frame is a data frame or the other frame. When the content is the frame except for the data frame, the step advances to the step 2807. Since the processing contents at the step 2807 are beyond the scope of the present invention, the description thereof is omitted.

Next, the frame decoding means 2113 extracts only the portion of the data field from the received data frame to transform it into a shape shown in the format (4) of Fig. 12 and advances to the step 2803.

(Step 2803)

At the step, the contents of the <data classification> identifier 2341 of the frame shown in the format (4) of Fig. 12 is checked to examine whether or not the received data frame is the remote control data. When the frame is not the remote control data after the checking operation, the step advances to the step 2808. Since the processing contents at the step 2808 are beyond the scope of the present invention, the description thereof will be described.

When the frame has been judged to be remote control data through the checking operation, the step advances to the step 2804.

(Step 2804)

At this step, the contents of the <format classification> identifier 2342 of the frame shown in the format (4) of Fig. 12 to judge what data format the received remote control data frame is. In the case of the format, in which the system control means 2122 of the station which has received the frame can decode the contents like the remote control format of one's company or the standardized Household Electric Product Association format, the step advances to the step 2805. In the case of the format where the contents cannot be decoded except for it, the received frame is discarded to complete the processing and the processing returns to the head of the processing routine 4.

(Step 2805)

At this step, the received remote control data frame is set to the format designated by the format classification 2342 so as to re-configure the remote control data.

(Sep 2806)

At this step, the remote control data re-configured at the step 2805 is transferred with respect to the system control means 2122. The reason why the signal to be sent to the system control means 2122 is put into the remote control data form is that means such as software and so on for decoding the remote control data and effecting the necessary control is already prepared within the system control means 2122. If the circumstances require, the contents of the remote control data are decoded and the function part 2121 may be directly controlled.

As all the processings are completed, the received frames are discarded, and the routine returns to the head of the processing routine 4.

(c) Description of the concrete example of the embodiment

In order to further understand the above described processing, a concrete example will be described hereinafter. The step 2805 and the step 2806 which were insufficient in the description in the paragraph "(b) operation" will be described here with emphasis.

(Step 2805)

At this step, the received remote control data frame is set to the format specified by the format classification 2342 so as to re-configure the remote control data.

Assume that the remote control data received at present is the A company format at the <format classification 2342> = 0000 (H).

Also, assume that the actual contents of the received data 1, the data 2, the data 3 (2343 through 2345) are the contents shown in the (3) of Fig. 12.

The first processing at the step is that the received data 1 through data 3 is bit-divided in accordance with the format specified by the <format classification>2342. Since the A company format shown in the example is composed of a device code 5 bits 2302, a data code 6 bits 2303, a device code inversion bit 5 bits 2304, a data code inversion bit 6 bits 2305, a check bit 1 bit 2306, the received data are divided into 5 bits, 6 bits, 5 bits, 6 bits, 1 bit from the head. When the above described re-division has been effected, the bit left over last is judged to be the dummy bit 2350 and is deleted. In this example, one bit is deleted as the dummy bit (see Fig. 12 (2)).

Then, a head 2301 is added before the device code 2302, the trailer 2307 is added after the check bit 2302 so as to complete the remote control data frame of the A company format.

The processing at this step is different in the method or the like of re-dividing of the bit row by the contents specified by the <format classification> 2342.

(Step 2806)

Since the step is effected as in the paragraph of the "(b) operation", the description will be omitted.

Although the receiver of the remote control roll apparatus has been built in in each device in all the embodiments, it may be constructed as a separate member in the system in addition to the above description.

## Claims

1. A remote control system for controlling at least two electronic devices each having an identifying address and at least more than two individual predetermined operating modes, connected to the other devices through information transmission paths and positioned to be controlled by a remote control signal transmitted from a transmitter which is adapted to transmit the signal consisting of either an operation signal for controlling the operation of each of the devices or a designation signal for designating one of the identified devices to be controlled by the operation signal, each of the devices comprising:
a receiver (400) for receiving the remote control signal;

a control means (420) for controlling the operation of the device in connection with the predetermined mode upon receiving the signal from the receiver (400); and
a communication means (410) for transmitting the signal from the receiver to the other devices through the paths;
characterized in that said receiver includes:
a storing means (404) for storing the designation signal having been transmitted from the transmitter so as to be able to control the control means (420) by an operation signal from the transmitter in the predetermined modes;
a first comparing means (405) for judging whether the signal presently received from the transmitter is an operation signal or a designation signal, and, in the case of the presently received signal being a designating signal, comparing the presently received dsesignating signal with the designation signal having been stored in the storing means (404) to maintain the designation signal in the storing means (404) in the case of coincidence between them, while, in the case of disagreement between them, the designation signal in the storing means (404) is replaced by the presently received designating signal from the transmitter which is also transmitted to all receivers of the other devices through the communication means (410); and
a second comparing means (406) for comparing, upon receiving the just received signal being an operation signal from the first comparing means (405), the identifying address of the device designated by the designation signal having been stored in the storing means (404) with the identifying address of the device receiving the remote control signal, and, if the two identifying addresses are the same, sending the operation signal to the control means (420), while, if the two identifying addresses are different, the operation signal is sent through the communication means (410) to the device designated by the designation signal having been stored in the storing means (404).

**2.** A system according to claim 1,
characterized in that said receiver includes:
a first demodulation means having a specific signal arrangement stored therein, said specific signal arrangement being compared with the signal arrangement of the signal unit received by the receiver so as to output a signal indicating the agreement or disagreement therebetween;
a second demodulation means for judging, upon receiving the agreement signal from the first demodulation means, whether or not the device select signal of the signal unit is directed to the device having the receiver so as to output a signal indicating the identity or non-identity thereof;
a data code process means for judging, upon receiving the disagreement signal from the first demodulation means, whether or not the control command of the device control signal of the signal unit is a kind of command common to the other devices to output a signal indicating whether the command is common or special;
a first format converting means for converting, upon receiving the disagreement signal from the first demodulation means or the special signal from the data code process means, the signal unit of the transmitter to an equivalent transfer signal for transferring through the information transmitting paths;
a second format converting means for converting, upon receiving the command signal from the data code process means, the signal unit of the transmitter to a control command for operating the designated device;
a frame generating means for forming the equivalent transfer signal into a first transfer signal for transferring toward all of the other devices through the information transmitting paths, and for forming the control command into a second transfer signal for transferring toward the designated device through the information transmitting paths; and
a system control means for controlling, upon receiving the identity signal from the second demodulation means, the operation of the device on the basis of the device control signal of the signal unit;
and the other devices each comprise:
a frame decode means for judging whether or not the transfer signal from the frame generating means of the device is a common command to output a signal indicating whether the command is common or special;
a first format counter conversion means for converting the transfer signal to the original signal unit in a counter, upon receiving the special signal from the frame decode means;
a second format counter conversion means for judging whether or not the signal unit from the first format counter conversion means has a specific signal arrangement relating to each of the other devices to output a signal indicating the agreement or disagreement therebetween;
a format counter conversion means for neglecting, upon receiving the disagreement signal from the second format counter conversion means, the signal unit, and for judging, upon receiving the agreement signal from the second format counter conversion means, whether or not the signal unit is directed to each of the other devices to output a signal indicating the identity or non-identity thereof; and
a system control means for neglecting, upon receiving the non-identity signal from the format counter conversion means, the signal unit, and for controlling, upon receiving one of the identity signal from the format counter conversion signal and the common signal from the frame decode means, the operation of the designated device on the basis of the device control signal of the signal unit.

**3.** A system according to claim 1,
characterized in that said receiver includes:
a first demodulation means having a specific signal arrangement stored therein, said specific signal arrangement being compared with the signal arrangement of the signal unit received by the receiver to output a signal indicating the agreement or disagreement therebetween;
a second demodulation means for judging, upon receiving the agreement signal from the first demodulation means, whether or not the device select signal of the signal unit is directed to one device having the receiver so as to output a signal indicating the identity or non-identity thereof;
a data code process means for judging, upon receiving the disagreement signal from the first demodulation means, whether or not the control command of the device control signal of the signal unit is a kind of command common to the other devices to output a signal indicating whether the command is common or special, and for neglecting the signal unit in the case of outputting the special signal;
a first format converting means for converting, upon receiving the disagreement signal from the first demodulation means, the signal unit of the transmitter to an equivalent transfer signal for transferring through the information transmitting paths;
a second format converting means for converting, upon receiving the common signal from the data code process means, the signal unit of the transmitter to a control command for operating the designated device;
a frame generating means for forming the equivalent transfer signal into a first transfer signal for transferring toward all of the other devices through the information transmitting paths, and for forming the control command into a second transfer signal for transferring toward the designated device through the information transmitting paths; and
a system control means for controlling, upon receiving the identity signal from the second demodulation means, the operation of the device on the basis of the device control signal of the signal unit;
and the other devices each comprise:
a frame decode means for judging whether or not the transfer signal from the frame generating means of the device is a common command to output a signal indicating whether the command is common or special;
a first format counter conversion means for converting the transfer signal to the original signal unit, in a counter, upon receiving the special signal from the frame decode means;
a second format counter conversion means for judging whether or not the signal unit from the first format counter conversion means has a specific signal arrangement relating to each of the other devices to output a signal indicating the agreement or disagreement therebetween;
a format counter conversion means for neglecting, upon receiving the disagreement signal from the second format counter conversion means, the signal unit, and for judging, upon receiving the agreement signal from the second format counter conversion means, whether or not the signal unit is directed to each of the other devices to output a signal indicating the identity or non-identity thereof; and
a system control means for neglecting, upon receiving the non-identity signal from the format counter conversion means, the signal unit, and for controlling, upon receiving the identity signal from one of the format counter conversion signal and the common signal from the frame decode means, the operation of the designated device on the basis of the device control signal of the signal unit.

**4.** A system according to claim 1,
characterized in that said receiver includes:
a first demodulation means (2102) having a specific signal arrangement stored therein, said specific signal arrangement being compared with the signal arrangement of the signal unit received by the receiver to output a signal indicating the agreement or disagreement therebetween, and for neglecting the signal unit in the case of outputting the disagreement signal;
a second demodulation means (2102) for judging, upon receiving the agreement signal from the first demodulation means, whether or not the device select signal of the signal unit is directed to the device having the receiver so as to output a signal indicating the identity or non-identity thereof;
a data code process means (2103) for judging, upon receiving the disagreement signal from the first demodulation means, whether or not the control command of the device control signal of the signal unit is a kind of a command common to the other devices to output a signal indicating whether the command is common or special, and for neglecting the signal unit in the case of outputting the special signal;
a format converting means (2104) for converting, upon receiving the common signal from the data code process means (2103), the signal unit for the transmitter to a control command for operating the designated device;
a frame generating means (2112) for forming the control command into a second transfer signal for transferring toward the designated device through the information transmitting paths; and
a system control means (2122) for controlling, upon receiving the identity signal from the second demodulation means (2102), the operation of the device on the basis of the device control signal of the signal unit;
and the other devices each comprise:
a frame decode means (2113) for judging whether or not the transfer signal from the frame generating means (2112) of the device is a common command to output a signal indicating whether the command is common or special, and for neglecting the transfer signal in the case of outputting the special signal; and
a system control means (2122) for controlling, upon receiving the common signal from the frame decode means (2113), the operation of the designated device on the basis of the device control signal of the signal unit.

**5.** A system according to claim 1,
characterized in that said receiver includes:
a first demodulation means having a specific signal arrangement stored therein, said specific signal arrangement being compared with the signal arrangement of the signal unit received by the receiver to output a signal indicating the agreement or disagreement therebetween;
a second demodulation means for judging, upon receiving the agreement signal from the first demodulation means, whether or not the device select signal of the signal unit is directed to the device having the receiver so as to output a signal indicating the identity or non-identity thereof;
a first format converting means for converting the signal unit of the transmitter to an equivalent transfer signal for transferring through the information transmitting paths, upon receiving one of the disagreement signal from the first demodulation means and the non-identity signal from the second demodulation means;
a frame generating means for forming the equivalent transfer signal into a transfer signal for transferring toward all of the other devices through the information transmitting paths; and
a system control means for controlling, upon receiving the identity signal from the second demodulation means, the operation of the device on the basis of the device control signal of the signal unit;
and the other devices each comprise:
a first format counter conversion means for converting the transfer signal transmitted from the frame generating means to the original signal unit in a counter;
a second format counter conversion means for judging whether or not the signal unit from the first format counter conversion means has a specific signal arrangement relating to each of the other devices to output a signal indicating the agreement or disagreement therebetween;
a format counter conversion means for neglecting, upon receiving the disagreement signal from the second format counter conversion means, the signal unit, and for judging, upon receiving the agreement signal from the second format counter conversion means, whether or not the signal unit is directed to each of the other devices to output a signal indicating the identity or non-identity thereof; and
a system control means for neglecting, upon receiving the non-identity signal from the format counter conversion means, the signal unit, and for controlling, upon receiving the identity signal from the format counter conversion signal, the operation of the designated device on the basis of the device control signal of the signal unit.

**6.** A system according to claim 1,
characterized in that said receiver includes:
a first demodulation means (2102) having a specific signal arrangement stored therein, said specific signal arrangement being compared with the signal arrangement of the signal unit received by the receiver to output a signal indicating the agreement or disagreement therebetween; and for neglecting the signal unit in the case of outputting the disagreement signal;

a second demodulation means (2102) for judging, upon receiving the agreement signal from the first demodulation means, whether or not the device select signal of the signal unit is directed to the device having the receiver so as to output a signal indicating the identity or non-identity thereof;
a format converting means (2104) for converting the signal unit of the transmitter to an equivalent transfer signal for transferring through the information transmitting paths, upon receiving the non-identity signal from the second demodulation means;
a frame generating means (2112) for forming the equivalent transfer signal into a first transfer signal for to transferring toward all of the other devices through the information transmitting paths; and
a system control means (2122) for controlling, upon receiving the identity signal from the second demodulation means, the operation of the device on the basis of the device control signal of the signal unit;
and the other devices each comprise:
a first format counter conversion means (2123) for converting the transfer signal transmitted from the frame generating means to the original signal unit in a counter;
a second format counter conversion means (2123) for judging whether or not the signal unit from the first format counter conversion means is directed to each of the other devices to output a signal indicating the identity or non-identity thereof; and
a system control means (2122) for neglecting, upon receiving the non-identity signal from the format counter conversion means (2123), the signal unit, and for controlling, upon receiving the identity signal from the format counter conversion signal, the operation of the designated device on the basis of the device control signal of the signal unit.

## Patentansprüche

1. Fernsteuersystem zur Steuerung von mindestens zwei elektronischen Vorrichtungen, jeweils mit einer kennzeichnenden Adresse und mindestens mehr als zwei einzelnen vorbestimmten Betriebsarten, die mit den anderen Vorrichtungen über Informationsübertragungswege verbunden sind und so positioniert sind, daß sie von einem Fernsteuersignal gesteuert werden, das von einem Sender übertragen wird, der das Signal übertragen kann, das entweder aus einem Betriebssignal zur Steuerung des Betriebs jeder der Vorrichtungen oder einem Bezeichnungssignal zum Bezeichnen einer der gekennzeichneten Vorrichtungen zur Steuerung durch das Betriebssignal besteht, wobei jede der Vorrichtungen folgendes umfaßt:
einen Empfänger (400) zum Empfangen des Fernsteuersignals;
ein Steuermittel (420) zum Steuern der Funktion der Vorrichtung in Verbindung mit der vorbestimmten Betriebsart bei Empfang des Signals vom Empfänger (400); und
ein Kommunikationsmittel (410) zur Übertragung des Signals vom Empfänger zu den anderen Vorrichtungen über die Wege;
dadurch gekennzeichnet, daß der besagte Empfänger folgendes enthält:
ein Speichermittel (404) zum Speichern des Bezeichnungssignals, das vom Sender übertragen worden ist, um das Steuermittel (420) durch ein Betriebssignal vom Sender in den vorbestimmten Betriebsarten steuern zu können;
ein erstes Vergleichsmittel (405) zum Entscheiden, ob das gegenwärtig vom Sender empfangene Signal ein Betriebssignal oder ein Bezeichnungssignal ist, und, wo das gegenwärtig empfangene Signal ein Bezeichnungssignal ist, Vergleichen des gegenwärtig empfangenen Bezeichnungssignals mit dem im Speichermittel (404) gespeicherten Bezeichnungssignal, um das Bezeichnungssignal im Speichermittel (404) im Falle einer Übereinstimmung zwischen diesen zu erhalten, während im Falle einer Nichtübereinstimmung zwischen diesen das Bezeichnungssignal im Speichermittel (404) gegen das gegenwärtig empfangene Bezeichnungssignal vom Sender, das auch an alle Empfänger der anderen Vorrichtungen über das Kommunikationsmittel (410) übertragen wird, ausgetauscht wird; und
ein zweites Vergleichsmittel (406) zum Vergleichen, bei Empfang vom ersten Vergleichsmittel (405), daß das eben empfangene Signal ein Betriebssignal ist, der Identifizierungsadresse der von dem im Speichermittel (404) gespeicherten Bezeichnungssignal bezeichneten Vorrichtung mit der Identifizierungsadresse der das Fernsteuersignal empfangenden Vorrichtung, und, wenn die beiden Identifizierungsadressen dieselben sind, Übertragen des Betriebssignals zum Steuermittel (420), während, wenn die beiden Identifizierungsadressen unterschiedlich sind, das Betriebssignal über das Kommunikationsmittel (410) zu der von dem im Speichermittel (404) gespeicherten Bezeichnungssignal bezeichneten Vorrichtung übertragen wird.

2. System nach Anspruch 1,

dadurch gekennzeichnet, daß der besagte Empfänger folgendes enthält:
ein erstes Demoduliermittel, in dem eine bestimmte Signalanordnung gespeichert ist, wobei die besagte bestimmte Signalanordnung mit der Signalanordnung der vom Empfänger empfangenen Signaleinheit verglichen wird, um ein die Übereinstimmung oder Nichtübereinstimmung zwischen diesen anzeigendes Signal auszugeben;
ein zweites Demodulierungsmittel zum Entscheiden bei Empfang des Übereinstimmungssignals vom ersten Demodulierungsmittel, ob das Vorrichtungsauswahlsignal der Signaleinheit an die Vorrichtung mit dem Empfänger gerichtet ist oder nicht, um ein die Identität oder Nichtidentität derselben anzeigendes Signal auszugeben;
ein Datencodeverarbeitungsmittel zum Entscheiden, bei Empfang des Nichtübereinstimmungssignals vom ersten Demoduliermittel, ob der Steuerbefehl des Vorrichtungssteuersignals der Signaleinheit eine den anderen Vorrichtungen gemeinsame Befehlsart ist oder nicht, um ein Signal auszugeben, das anzeigt, ob der Befehl gemeinsam oder gesondert ist;
ein erster Formatwandler zum Umwandeln, bei Empfang des Nichtübereinstimmungssignals vom ersten Demodulierungsmittel oder des Sondersignals vom Datencodeverarbeitungsmittel, der Signaleinheit des Senders in ein gleichwertiges Übertragungssignal zur Übertragung über die Informationsübertragungswege;
ein zweiter Formatwandler zum Umwandeln, bei Empfang des Befehlssignals vom Datencodeverarbeitungsmittel, der Signaleinheit des Senders in einen Steuerbefehl zur Betätigung der bezeichneten Vorrichtung;
ein Rahmenerzeugungsmittel zum Umformen des gleichwertigen Übertragungssignals in ein erstes Übertragungssignal zur Übertragung zu allen anderen Vorrichtungen über die Informationsübertragungswege und zum Umformen des Steuerbefehls in ein zweites Übertragungssignal zur Übertragung zu der bezeichneten Vorrichtung über die Informationsübertragungswege; und
ein Systemsteuermittel zur Steuerung, bei Empfang des Identitätssignals vom zweiten Demodulierungsmittel, der Funktion der Vorrichtung auf Grundlage des Vorrichtungssteuersignals der Signaleinheit;
und die anderen Vorrichtungen jeweils folgendes umfassen:
ein Rahmendecodiermittel zum Entscheiden, ob das Übertragungssignal vom Rahmenerzeugungsmittel der Vorrichtung ein gemeinsamer Befehl ist oder nicht, um ein Signal auszugeben, das anzeigt, ob der Befehl gemeinsam oder gesondert ist; ein erster Formatzählerwandler zum Umwandeln des Übertragungssignals in die ursprüngliche Signaleinheit in einem Zähler, bei Empfang des Sondersignals vom Rahmendecodiermittel;
ein zweiter Formatzählerwandler zum Entscheiden, ob die Signaleinheit vom ersten Formatzählerwandler eine besondere auf jede der anderen Vorrichtungen bezogene Signalanordnung aufweist oder nicht, um ein die Übereinstimmung oder Nichtübereinstimmung zwischen diesen anzeigendes Signal auszugeben;
ein Formatzählerwandler zum Ignorieren der Signaleinheit bei Empfang des Nichtübereinstimmungssignals vom zweiten Formatzählerwandler und zum Entscheiden, bei Empfang des Übereinstimmungssignals vom zweiten Formatzählerwandler, ob die Signaleinheit an jede der anderen Vorrichtungen gerichtet ist oder nicht, um ein die Identität oder Nichtidentität derselben anzeigendes Signal auszugeben; und
ein Systemsteuermittel zum Ignorieren der Signaleinheit bei Empfang des Nichtidentitätssignals vom Formatzählerwandler und zum Steuern, bei Empfang entweder des Identitätssignals vom Formatzählerwandler oder des gemeinsamen Signals vom Rahmendecodiermittel, der Funktion der bezeichneten Vorrichtung auf Grundlage des Vorrichtungssteuersignals der Signaleinheit.

**3.** System nach Anspruch 1,
dadurch gekennzeichnet, daß der besagte Empfänger folgendes enthält:
ein erstes Demodulierungsmittel, in dem eine bestimmte Signalanordnung gespeichert ist, wobei die besagte bestimmte Signalanordnung mit der Signalanordnung der vom Empfänger empfangenen Signaleinheit verglichen wird, um ein die Übereinstimmung oder Nichtübereinstimmung zwischen diesen anzeigendes Signal auszugeben;
ein zweites Demodulierungsmittel zum Entscheiden, bei Empfang des Übereinstimmungssignals vom ersten Demodulierungsmittel, ob das Vorrichtungsauswahlsignal der Signaleinheit an eine Vorrichtung mit dem Empfänger gerichtet ist oder nicht, um ein die Identität oder Nichtidentität derselben anzeigendes Signal auszugeben;
ein Datencodeverarbeitungsmittel zum Entscheiden, bei Empfang des Nichtübereinstimmungssignals vom ersten Demodulierungsmittel, ob der Steuerbefehl des Vorrichtungssteuersignals der Signaleinheit eine den anderen Vorrichtungen gemeinsame Befehlsart ist oder nicht, um ein Signal auszugeben, das anzeigt, ob der Befehl gemeinsam oder gesondert ist, und zum Ignorieren der Signaleinheit im Falle der Ausgabe des Gesondert-Signals;
ein erster Formatwandler zum Umwandeln, bei Empfang des Nichtübereinstimmungssignals vom ersten Demodulierungsmittel, der Signaleinheit des Senders in ein gleichwertiges Übertragungssignal zur Übertragung über die Informationsübertragungswege;
ein zweiter Formatwandler zum Umwandeln, bei Empfang des Gemeinsam-Signals vom Datencodeverarbeitungsmittel, der Signaleinheit des Senders in einen Steuerbefehl zur Betätigung der bezeichneten Vorrichtung;
ein Rahmenerzeugungsmittel zum Formen des äquivalenten Übertragungssignals in ein erstes Übertragungssignal zur Übertragung zu allen anderen Vorrichtungen über die Informationsübertragungswege und zum Formen des Steuerbefehls in ein zweites Übertragungssignal zum Übertragen zu der bezeichneten Vorrichtung über die Informationsübertragungswege; und
ein Systemsteuermittel zum Steuern, bei Empfang des Identitätssignals vom zweiten Demodulierungsmittel, der Funktion der Vorrichtung auf Grundlage des Vorrichtungssteuersignals der Signaleinheit;
und die anderen Vorrichtungen jeweils folgendes umfassen:
ein Rahmendecodiermittel zum Entscheiden, ob das Übertragungssignal vom Rahmenerzeugungsmittel der Vorrichtung ein gemeinsamer Befehl ist oder nicht, um ein Signal auszugeben, das anzeigt, ob der Befehl gemeinsam oder gesondert ist;
ein erster Formatzählerwandler zum Umwandeln des Übertragungssignals in die ursprüngliche Signal einheit in einem Zähler bei Empfang des Gesondert-Signals vom Rahmendecodiermittel;
ein zweiter Formatzählerwandler zum Entscheiden, ob die Signaleinheit vom ersten Formatzählerwandler eine bestimmte auf jede der anderen Vorrichtungen bezogene Signalanordnung aufweist oder nicht, um ein Signal auszugeben, das die Übereinstimmung oder Nichtübereinstimmung zwischen diesen anzeigt;
ein Formatzählerwandler zum Ignorieren der Signaleinheit bei Empfang des Nichtübereinstimmungssignals vom zweiten Formatzählerwandler und zum Entscheiden, bei Empfang des Übereinstimmungssignals vom zweiten Formatzählerwandler, ob die Signaleinheit an jede der anderen Vorrichtungen gerichtet ist oder nicht, um ein die Identität oder Nichtidentität derselben anzeigendes Signal auszugeben; und
ein Systemsteuermittel zum Ignorieren der Signaleinheit bei Empfang des Nichtidentitätssignals vom Formatzählerwandler und zum Steuern, bei Empfang des Identitätssignals von einem der Formatzählerwandler und des Gemeinsam-Signals vom Rahmendecodiermittel, der Funktion der bezeichneten Vorrichtung auf der Grundlage des Vorrichtungssteuersignals der Signaleinheit.

**4.** System nach Anspruch 1,
dadurch gekennzeichnet, daß der besagte Empfänger folgendes enthält:
ein erstes Demodulierungsmittel (2102) mit einer darin gespeicherten besonderen Signalanordnung, wobei die besondere Signalanordnung mit der Signalanordnung der vom Empfänger empfangenen Signaleinheit verglichen wird, um ein die Übereinstimmung oder Nichtübereinstimmung zwischen diesen anzeigendes Signal auszugeben, und zum Ignorieren der Signaleinheit im Falle der Ausgabe des Nichtübereinstimmungssignals;
ein zweites Demodulierungsmittel (2102) zur Entscheidung, bei Empfang des Übereinstimmungssignals vom ersten Demodulierungsmittel, ob das Vorrichtungsauswahlsignal der Signaleinheit an die Vorrichtung mit dem Empfänger gerichtet ist oder nicht, um ein die Identität oder Nichtidentität derselben anzeigendes Signal auszugeben;
ein Datencodeverarbeitungsmittel (2103) zum Entscheiden, bei Empfang des Nichtübereinstimmungssignals vom ersten Demodulierungsmittel, ob der Steuerbefehl des Vorrichtungssteuersignals der Signaleinheit eine den anderen Vorrichtungen gemeinsame Befehlsart ist oder nicht, um ein Signal auszugeben, das anzeigt, ob der Befehl gemeinsam oder gesondert ist, und zum Ignorieren der Signaleinheit im Falle der Ausgabe des Gesondert-Signals;
ein Formatwandler (2104) zum Umwandeln, bei Empfang des Gemeinsam-Signals vom Datencodeverarbeitungsmittel, (2103) der Signaleinheit für den Sender in einen Steuerbefehl zur Betätigung der bezeichneten Vorrichtung;
ein Rahmenerzeugungsmittel (2112) zum Formen des Steuerbefehls in ein zweites Übertragungssignal zur Übertragung zur bezeichneten Vorrichtung über die Informationsübertragungswege; und
ein Systemsteuermittel (2122) zum Steuern, bei Empfang des Identitätssignals vom zweiten Demodulierungsmittel (2102), der Funktion der Vorrichtung auf der Grundlage des Vorrichtungssteuersignals der Signaleinheit;
und die anderen Vorrichtungen jeweils folgendes umfassen:

ein Rahmendecodiermittel (2113) zum Entscheiden, ob das Übertragungssignal vom Rahmenerzeugungsmittel (2112) der Vorrichtung ein gemeinsamer Befehl ist oder nicht, um ein Signal auszugeben, das anzeigt, ob der Befehl gemeinsam oder gesondert ist, und zum Ignorieren des Übertragungssignals im Fall der Ausgabe des Gesondert-Signals; und
ein Systemsteuermittel (2122) zum Steuern, bei Empfang des Gemeinsam-Signals vom Rahmendecodiermittel (2113), der Funktion der bezeichneten Vorrichtung auf Grundlage des Vorrichtungssteuersignals der Signaleinheit.

**5.** System nach Anspruch 1,
dadurch gekennzeichnet, daß der besagte Empfänger folgendes enthält:
ein erstes Demodulierungsmittel, in dem eine bestimmte Signalanordnung gespeichert ist, wobei die besagte bestimmte Signalanordnung mit der Signalanordnung der vom Empfänger empfangenen Signaleinheit verglichen wird, um ein die Übereinstimmung oder Nichtübereinstimmung zwischen diesen anzeigendes Signal auszugeben;
ein zweites Demodulierungsmittel zum Entscheiden, bei Empfang des Übereinstimmungssignals vom ersten Demodulierungsmittel, ob das Vorrichtungsauswahlsignal der Signaleinheit an die Vorrichtung mit dem Empfänger gerichtet ist oder nicht, um ein die Identität oder Nichtidentität derselben anzeigendes Signal auszugeben;
ein erster Formatwandler zum Umwandeln der Signaleinheit des Senders in ein äquivalentes Übertragungssignal zur Übertragung über die Informationsübertragungswege, bei Empfang entweder des Nichtübereinstimmungssignals vom ersten Demodulierungsmittel oder des Nichtidentitätssignals vom zweiten Demodulierungsmittel;
ein Rahmenerzeugungsmittel zum Umformen des äquivalenten Übertragungssignals in ein Übertragungssignal zur Übertragung zu allen anderen Vorrichtungen über die Informationsübertragungswege;
und ein Systemsteuermittel zum Steuern, bei Empfang des Identitätssignals vom zweiten Demodulierungsmittel, der Funktion der Vorrichtung auf Grundlage des Vorrichtungssteuersignals der Signaleinheit;
und die anderen Vorrichtungen jeweils folgendes umfassen:
ein erster Formatzählerwandler zum Umwandeln des vom Rahmenerzeugungsmittel übertragenen Übertragungssignals in die ursprüngliche Signaleinheit in einem Zähler;
ein zweiter Formatzählerwandler zum Entscheiden, ob die Signaleinheit vom ersten Formatzählerwandler eine besondere auf jede der anderen Vorrichtungen bezogene Signalanordnung aufweist oder nicht, um ein die Übereinstimmung oder Nichtübereinstimmung zwischen diesen anzeigendes Signal auszugeben;
ein Formatzählerwandler zum Ignorieren der Signaleinheit bei Empfang des Nichtübereinstimmungssignals vom zweiten Formatzählerwandler und zum Entscheiden, bei Empfang des Übereinstimmungssignals vom zweiten Formatzählerwandler, ob die Signaleinheit an jede der anderen Vorrichtungen gerichtet ist oder nicht, um ein die Identität oder Nichtidentität derselben anzeigendes Signal auszugeben; und
ein Systemsteuermittel zum Ignorieren der Signaleinheit bei Empfang des Nichtidentitätssignals vom Formatzählerwandler und zum Steuern, bei Empfang des Identitätssignals vom Formatzählerwandler, der Funktion der bezeichneten Vorrichtung auf Grundlage des Vorrichtungssteuersignals der Signaleinheit.

**6.** System nach Anspruch 1,
dadurch gekennzeichnet, daß der besagte Empfänger folgendes enthält: ein erstes Demodulierungsmittel (2102) mit einer darin gespeicherten besonderen Signalanordnung, wobei die besondere Signalanordnung mit der Signalanordnung der vom Empfänger empfangenen Signaleinheit verglichen wird, um ein die Übereinstimmung oder Nichtübereinstimmung zwischen diesen anzeigendes Signal auszugeben, und zum Ignorieren der Signaleinheit im Falle der Ausgabe des Nichtübereinstimmungssignals;
ein zweites Demodulierungsmittel (2102) zur Entscheidung, bei Empfang des Übereinstimmungssignals vom ersten Demodulierungsmittel, ob das Vorrichtungsauswahlsignal der Signaleinheit an die Vorrichtung mit dem Empfänger gerichtet ist oder nicht, um ein die Identität oder Nichtidentität derselben anzeigendes Signal auszugeben;
ein Formatwandler (2104) zum Umwandeln der Signaleinheit des Senders in ein äquivalentes Übertragungssignal zur Übertragung über die Informationsübertragungswege bei Empfang des Nichtidentitätssignals vom zweiten Demodulierungsmittel;
ein Rahmenerzeugungsmittel (2112) zum Formen des äquivalenten Übertragungssignals in ein erstes Übertragungssignal zur Übertragung zu allen anderen Vorrichtungen über die Informationsübertragungswege; und
ein Systemsteuermittel (2122) zum Steuern, bei Empfang des Identitätssignals vom zweiten Demodulierungsmittel, der Funktion der Vorrichtung auf Grundlage des Vorrichtungssteuersignals der Signaleinheit; und die anderen Vorrichtungen jeweils folgendes umfassen:
ein erster Formatzählerwandler (2123) zum Umwandeln des vom Rahmenerzeugungsmittel übertragenen Übertragungssignals in die ursprüngliche Signaleinheit in einem Zähler;
ein zweiter Formatzählerwandler (2123) zum Entscheiden, ob die Signaleinheit vom ersten Formatzählerwandler an jede der anderen Vorrichtungen gerichtet ist oder nicht, um ein die Identität oder Nichtidentität derselben anzeigendes Signal auszugeben; und
ein Systemsteuermittel (2122) zum Ignorieren der Signaleinheit bei Empfang des Nichtidentitätssignals vom Formatzählerwandler (2123) und zum Steuern, bei Empfang des Identitätssignals vom Formatzählerwandler, der Funktion der bezeichneten Vorrichtung auf Grundlage des Vorrichtungssteuersignals der Signaleinheit.

## Revendications

1. Système de télécommande pour contrôler au moins deux dispositifs électroniques, dont chacun possède une adresse d'identification et au moins deux modes de fonctionnement particuliers prédéterminés, connectés aux autres dispositifs par des chemins de transmission d'informations et placés de façon à être commandés par un signal de télécommande transmis par un transmetteur qui est adapté pour transmettre le signal consistant ou bien en un signal de fonctionnement pour commander le fonctionnement de chacun des dispositifs, ou bien en un signal de désignation pour désigner celui des dispositifs identifiés à commander par le signal de fonctionnement, chacun des dispositifs comprenant :

   un récepteur (400) pour recevoir le signal de télécommande ;

   des moyens de commande (420) pour commander le fonctionnement du dispositif en relation avec le mode prédéterminé lors de la réception du signal provenant du récepteur (400) ; et

   des moyens de communication (410) pour transmettre le signal du récepteur aux autres dispositifs par les chemins ;

   caractérisé en ce que ledit récepteur comporte :

   des moyens de stockage (404) pour stocker le signal de désignation qui a été transmis par le transmetteur de façon à être susceptible de commander les moyens de commande (420) à l'aide d'un signal de fonctionnement provenant du transmetteur dans les modes prédéterminés ;

   des premiers moyens de comparaison (405) pour estimer si le signal qui vient d'être reçu du transmetteur est un signal de fonctionnement ou un signal de désignation, et, dans le cas où le signal qui vient d'être reçu est un signal de désignation, de comparer le signal de désignation qui vient d'être reçu au signal de désignation qui a été stocké dans les moyens de stockage (404) pour maintenir le signal de désignation dans les moyens de stockage dans le cas de leur coïncidence, tandis que, dans le cas d'un désaccord entre eux, le signal de désignation dans les moyens de stockage (404) est remplacé par le signal de désignation qui vient d'être reçu du transmetteur, qui est aussi transmis aux autres récepteurs des autres dispositifs par les moyens de communication (410) ; et

   des seconds moyens de comparaison (406) pour comparer, à la réception du signal qui vient d'être reçu quand il est un signal de fonctionnement provenant des premiers moyens de comparaison (405), l'adresse d'identification du dispositif désigné par le signal de désignation ayant été stocké dans les moyens de stockage (404) avec l'adresse d'identification du dispositif qui reçoit le signal de télécommande et, si les deux adresses d'identification sont les mêmes, pour émettre le signal de fonctionnement aux moyens de commande (420), alors que, si les deux adresses d'identification sont différentes, le signal de fonctionnement est émis par les moyens de communication (410) vers le dispositif désigné par le signal de désignation qui a été stocké dans les moyens de stockage (404).

2. Système selon la revendication 1, caractérisé en ce que ledit récepteur comporte :

   des premiers moyens de démodulation, dans lequel un groupe particulier de signaux a été stocké, ledit groupe particulier de signaux étant comparé aux groupes de signaux de l'unité de signal reçu par le récepteur de façon à produire en sortie un signal indicatif de l'accord ou du désaccord entre eux ;

   des seconds moyens de démodulation pour estimer, à la réception du signal d'accord provenant des premiers moyens de démodulation, si oui ou non le signal de sélection de dispositif de l'unité de signal est dirigé vers le dispositif comportant le récepteur, de façon à produire en sortie un signal indicatif de son identité ou de sa non identité ;

   des moyens de traitement de codes de données, pour estimer, à la réception du signal de désaccord provenant des premiers moyens de démodulation, si oui ou non l'instruction du signal de commande de dispositif de l'unité de signal est du genre d'une commande commune aux autres dispositifs pour sortir un signal indicatif du fait que l'instruction est une instruction commune ou une instruction spéciale;

des premiers moyens de conversion de format pour, à la réception du signal de désaccord provenant des premiers moyens de démodulation ou du signal spécial provenant des moyens de traitement de codes de données, convertir l'unité de signal du transmetteur en un signal de transfert équivalent à transférer par les chemins de transmission d'informations ;

des seconds moyens de conversion de format pour, à la réception du signal d'instruction provenant des moyens de traitement de codes de données, convertir l'unité de signal du transmetteur en une instruction de commande de fonctionnement du dispositif désigné ;

des moyens générateurs de trame pour former le signal de transfert équivalent en un premier signal de transfert à transférer vers l'ensemble des autres dispositifs par les chemins de transmission d'informations, et pour former l'instruction de commande en un second signal de transfert à transférer vers le dispositif désigné par les chemins de transmission d'informations ; et

des moyens de commande de système pour, à la réception du signal d'identité provenant des seconds moyens de démodulation, commander le fonctionnement du dispositif sur la base du signal de commande de dispositif de l'unité de signal ;

et les autres dispositifs comportant chacun :

des moyens de décodage de trame pour estimer si oui ou non le signal de transfert provenant des moyens générateurs de trame du dispositif est une instruction commune pour produire en sortie un signal indicatif du fait que l'instruction est une instruction commune ou une instruction spéciale;

des premiers moyens à compteur de conversion de formats pour convertir le signal de transfert en une unité de signal initial dans un compteur, lors de la réception du signal spécial provenant des moyens de décodages de trame ;

des seconds moyens à compteur de conversion de formats pour estimer si oui ou non l'unité de signal provenant des premiers moyens à compteur de conversion de formats comporte un groupe de signaux spécifique concernant chacun des autres dispositifs, pour produire en sortie un signal indicatif de l'accord ou du désaccord entre eux ;

des moyens à compteur de conversion de formats pour écarter l'unité de signal, lors de la réception du signal de désaccord provenant des seconds moyens à compteur de conversion de formats, et pour estimer, lors de la réception du signal d'accord des seconds moyens à compteur de conversions de formats, si oui ou non l'unité de signal est dirigée vers chacun des autres dispositifs, pour produire en sortie un signal indicatif de l'identité ou de la non identité ; et

des moyens de commande de système pour écarter l'unité de signal, lors de la réception du signal de non identité provenant des moyens à compteur de conversion de formats, et pour, lors de la réception du seul signal d'identité provenant des moyens à compteur de conversion de formats et du seul signal commun provenant des moyens de décodage de trame, commander le fonctionnement du dispositif désigné sur la base du signal de commande de dispositif de l'unité de signal.

**3.** Système selon la revendication 1, caractérisé en ce que ledit récepteur comporte :

des premiers moyens de démodulation dans lesquel un groupe particulier de signaux est stocké, ledit groupe particulier de signaux étant comparé au groupe de signaux de l'unité de signal reçue par le récepteur, de façon à produire en sortie un signal indicatif de l'accord ou du désaccord entre eux ;

des seconds moyens de démodulation pour estimer, à la réception du signal d'accord provenant des premiers moyens de démodulation si oui ou non le signal de sélection de dispositif de l'unité de signal est dirigé vers le seul dispositif comportant le récepteur, de façon à produire en sortie un signal indicatif de l'identité ou de la non identité ;

des moyens de traitement de codes de données pour, à la réception du signal de désaccord provenant des premiers moyens de démodulation, estimer si oui ou non l'instruction de commande du signal de commande de dispositif de l'unité de signal est du genre à instruction commune aux autres dispositifs, pour produire en sortie un signal indicatif du fait que l'instruction est une instruction commune ou une instruction spéciale, et pour écarter l'unité de signal dans le cas de la sortie du signal spécial ;

des premiers moyens de conversion de format pour, lors de la réception du signal de désaccord provenant des premiers moyens de démodulation, convertir l'unité de signal du transmetteur en un signal de transfert équivalent à transférer par les chemins de transmission d'informations ;

des seconds moyens de conversion de format pour, à la réception du signal commun provenant des moyens de traitement de codes de données, convertir l'unité de signal du transmetteur en une instruction de commande de fonctionnement du dispositif désigné ;

des moyens générateurs de trame pour former le signal de transfert équivalent en un premier signal de transfert à transférer vers l'ensemble des autres dispositifs par les chemins de transmission d'informations, et pour former l'instruction de commande en un second signal de transfert à transférer vers le dispositif désigné par les chemins de transmission d'informations ; et

des moyens de commande de système pour, à la réception du signal d'identité provenant des seconds moyens de démodulation, commander le fonctionnement du dispositif sur la base du signal de commande de dispositif de l'unité de signal ;

et les autres dispositifs comportant chacun :

des moyens de décodage de trame pour estimer si oui ou non le signal de transfert provenant des moyens générateurs de trame du dispositif est une instruction commune pour produire en sortie un signal indicatif du fait que l'instruction est une instruction commune ou une instruction spéciale;

des premiers moyens à compteur de conversion de formats pour convertir le signal de transfert en une unité de signal initial dans un compteur, lors de la réception du signal spécial provenant des moyens de décodages de trame ;

des seconds moyens à compteur de conversion de formats pour estimer si oui ou non l'unité de signal provenant des premiers moyens à compteur de conversion de formats comporte un groupe de signaux spécifique concernant chacun des autres dispositifs, pour produire en sortie un signal indicatif de l'accord ou du désaccord entre eux ;

des moyens à compteur de conversion de formats pour écarter l'unité de signal, lors de la réception du signal de désaccord provenant des seconds moyens à compteur de conversion de formats, et pour estimer, lors de la réception du signal d'accord des seconds moyens à compteur de conversions de formats, si oui ou non l'unité de signal est dirigée vers chacun des autres dispositifs, pour produire en sortie un signal indicatif de l'identité ou de la non identité ; et

des moyens de commande de système pour écarter l'unité de signal, lors de la réception du signal de non identité provenant des moyens à compteur de conversion de formats, et pour, lors de la réception du seul signal d'identité provenant des moyens à compteur de conversion de formats et du seul signal commun provenant des moyens de décodage de trame, commander le fonctionnement du dispositif désigné sur la base du signal de commande de dispositif de l'unité de signal.

**4.** Système selon la revendication 1, caractérisé en ce que ledit récepteur comporte :

des premiers moyens de démodulation (2102) dans lesquel un groupe particulier de signaux est stocké, ledit groupe particulier de signaux étant comparé au groupe de signaux de l'unité de signal reçue par le récepteur, de façon à produire en sortie un signal indicatif de l'accord ou du désaccord entre eux, et pour écarter l'unité de signal dans le cas de la sortie du signal de désaccord ;

des seconds moyens de démodulation (2102) pour, à la réception du signal d'accord provenant des premiers moyens de démodulation, estimer si oui ou non le signal de sélection de dispositif de l'unité de signal est dirigé vers le seul dispositif comportant le récepteur, de façon à produire en sortie un signal indicatif de l'identité ou de la non identité ;

des moyens de traitement de codes de données (2103) pour, à la réception du signal de désaccord provenant des premiers moyens de démodulation, estimer si oui ou non l'instruction de commande du signal de commande de dispositif de l'unité de signal est du genre à instruction commune aux autres dispositifs, pour produire en sortie un signal indicatif du fait que l'instruction est une instruction commune ou une instruction spéciale, et pour écarter l'unité de signal dans le cas de la sortie du signal spécial ;

des moyens de conversion de format (2104) pour, lors de la réception du signal commun provenant des des moyens de traitement de codes de données (2103), convertir l'unité de signal du transmetteur en une instruction de commande de fonctionnement du sdispositif désigné ;

des moyens générateurs de trame (2112) pour former l'instruction de commande en un second signal de transfert à transférer vers le dispositif désigné par les chemins de transmission d'informations ; et

des moyens de commande de système (2112) pour, à la réception du signal d'identité provenant des seconds moyens de démodulation (2102), commander le fonctionnement du dispositif sur la base du signal de commande de dispositif de l'unité de signal ;

et les autres dispositifs comportant chacun :

des moyens de décodage de trame (2113) pour estimer si oui ou non le signal de transfert provenant des moyens générateurs de trame (2112) du dispositif est une instruction commune pour produire en sortie un signal indicatif du fait que l'instruction est une instruction commune ou une instruction spéciale, et pour écarter le signal de transfert dans le cas de la sortie du signal spécial ; et

des moyens de commande de système (2112) pour, à la réception du signal commun provenant des moyens de décodage de trame (2113), commander le fonctionnement du dispositif désigné sur la base du signal de commande de dispositif de l'unité de signal.

5. Système selon la revendication 1, caractérisé en ce que ledit récepteur comporte :

des premiers moyens de démodulation dans lesquel un groupe particulier de signaux est stocké, ledit groupe particulier de signaux étant comparé au groupe de signaux de l'unité de signal reçue par le récepteur, de façon à produire en sortie un signal indicatif de l'accord ou du désaccord entre eux ;

des seconds moyens de démodulation pour estimer, à la réception du signal d'accord provenant des premiers moyens de démodulation si oui ou non le signal de sélection de dispositif de l'unité de signal est dirigé vers le seul dispositif comportant le récepteur, de façon à produire en sortie un signal indicatif de l'identité ou de la non identité ;

des premiers moyens de conversion de format pour convertir l'unité de signal du transmetteur en un signal de transfert équivalent à transférer par les chemins de transmission d'informations, lors de la réception du seul signal de désaccord provenant des premiers moyens de démodulation ou du seul signal de non-identité provenant des seconds moyens de démodulation ;

des moyens générateurs de trame pour former le signal de transfert équivalent en un signal de transfert à transférer vers l'ensemble des autres dispositifs par les chemins de transmission d'informations ; et

des moyens de commande de système pour, à la réception du signal d'identité provenant des seconds moyens de démodulation, commander le fonctionnement du dispositif sur la base du signal de commande de dispositif de l'unité de signal ;

et les autres dispositifs comportant chacun :

des premiers moyens à compteur de conversion de formats pour convertir le signal de transfert transmis par les moyens générateurs de trame en une unité de signal initial dans un compteur ;

des seconds moyens à compteur de conversion de formats pour estimer si oui ou non l'unité de signal provenant des premiers moyens à compteur de conversion de formats comporte un groupe de signaux spécifique concernant chacun des autres dispositifs, pour produire en sortie un signal indicatif de l'accord ou du désaccord entre eux ;

des moyens à compteur de conversion de formats pour écarter l'unité de signal, lors de la réception du signal de désaccord provenant des seconds moyens à compteur de conversion de formats, et pour, lors de la réception du signal d'accord des seconds moyens à compteur de conversions de formats, estimer si oui ou non l'unité de signal est dirigée vers chacun des autres dispositifs, pour produire en sortie un signal indicatif de l'identité ou de la non identité ; et

des moyens de commande de système pour écarter l'unité de signal, lors de la réception du signal de non identité provenant des moyens à compteur de conversion de formats, et pour, lors de la réception du signal d'identité provenant des moyens à compteur de conversion de formats, commander le fonctionnement du dispositif désigné sur la base du signal de commande de dispositif de l'unité de signal.

6. Système selon la revendication 1, caractérisé en ce que ledit récepteur comporte :

des premiers moyens de démodulation (2102) dans lesquel un groupe particulier de signaux est stocké, ledit groupe particulier de signaux étant comparé au groupe de signaux de l'unité de signal reçue par le récepteur, de façon à produire en sortie un signal indicatif de l'accord ou du désaccord entre eux, et pour écarter l'unité de signal dans le cas de la sortie du signal de désaccord ;

des seconds moyens de démodulation (2102) pour, à la réception du signal d'accord provenant des premiers moyens de démodulation, estimer si oui ou non le signal de sélection de dispositif de l'unité de signal est dirigé vers le dispositif comportant le récepteur, de façon à produire en sortie un signal indicatif de l'identité ou de la non identité ;

des moyens de conversion de format (2104) pour convertir l'unité de signal du transmetteur en un signal de transfert équivalent à transférer par les chemins de communication d'informations, lors de la réception du signal de non-identité provenant des seconds moyens de démodulation ;

des moyens générateurs de trame (2112) pour former le signal de transfert équivalent en un premier signal de transfert à transférer vers l'ensemble des autres dispositifs par les chemins de transmission d'informations ; et

des moyens de commande de système (2122) pour, à la réception du signal d'identité provenant des seconds moyens de démodulation, commander le fonctionnement du dispositif sur la base du signal de commande de dispositif de l'unité de signal ;

et les autres dispositifs comportant chacun :

des premiers moyens à compteur de conversion de formats (2123) pour convertir le signal de transfert transmis par les moyens générateurs de trame en une unité de signal initial dans un compteur ;

des seconds moyens à compteur de conversion de formats pour estimer si oui ou non l'unité de signal provenant des premiers moyens à compteur de conversion de formats est dirigée vers chacun des autres dispositifs, pour produire en sortie un signal indicatif de l'identité ou de la non-identité ; et

des moyens de commande de système (2122) pour, à la réception du signal de non-identité provenant des moyens à compteur de conversion de formats (2123), écarter l'unité de signal, et pour, à la réception du signal d'identité provenant des moyens à compteur de conversion de formats, commander le fonctionnement du dispositif désigné sur la base du signal de commande de dispositif de l'unité de signal.

Fig. 1

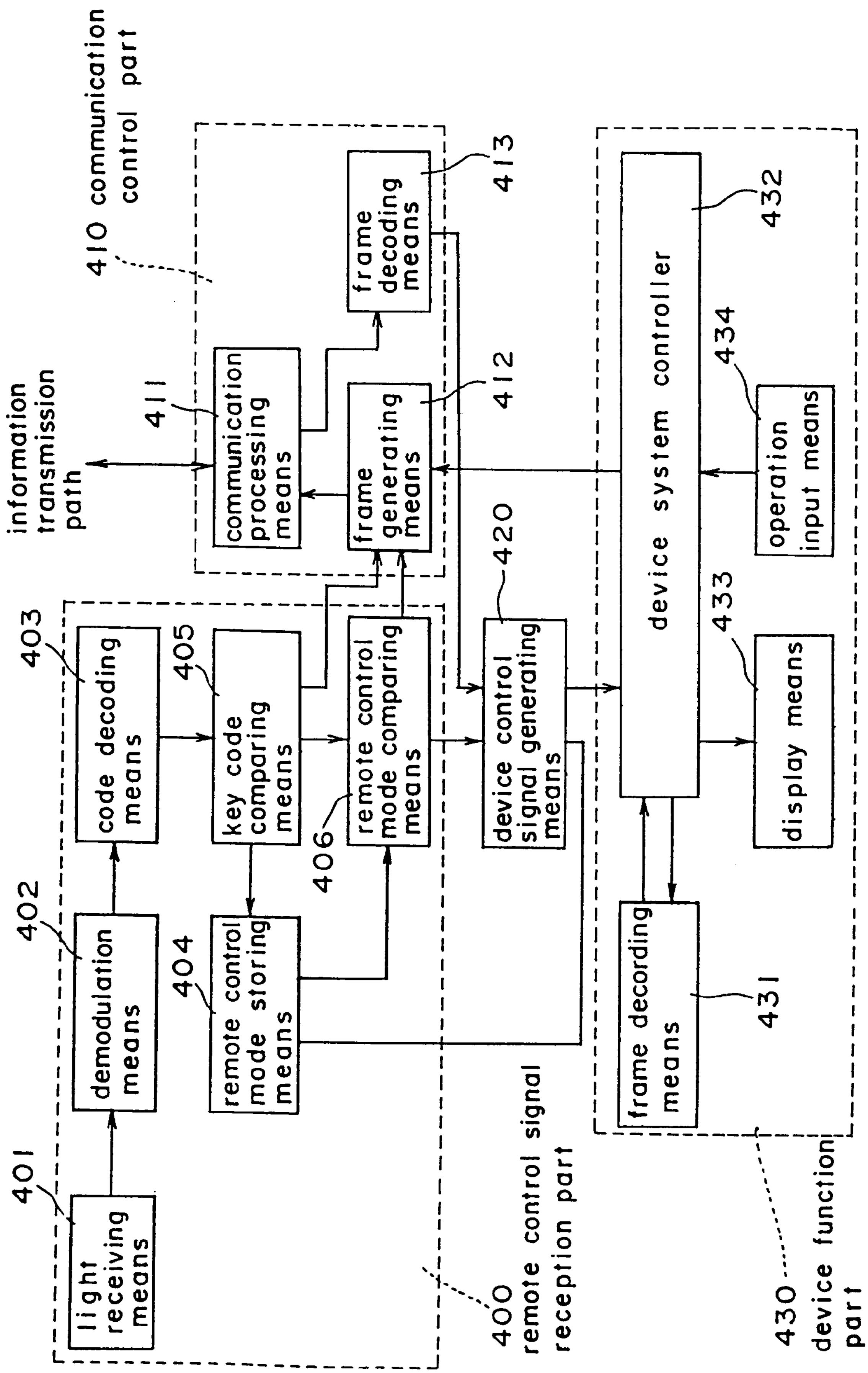

410 communication control part
information transmission path
411
communication processing means
412
frame generating means
413
frame decoding means
401
light receiving means
402
demodulation means
403
code decoding means
404
remote control mode storing means
405
key code comparing means
406
remote control mode comparing means
420
device control signal generating means
400
remote control signal reception part
432
device system controller
434
operation input means
433
display means
431
frame decording means
430
device function part

Fig. 2

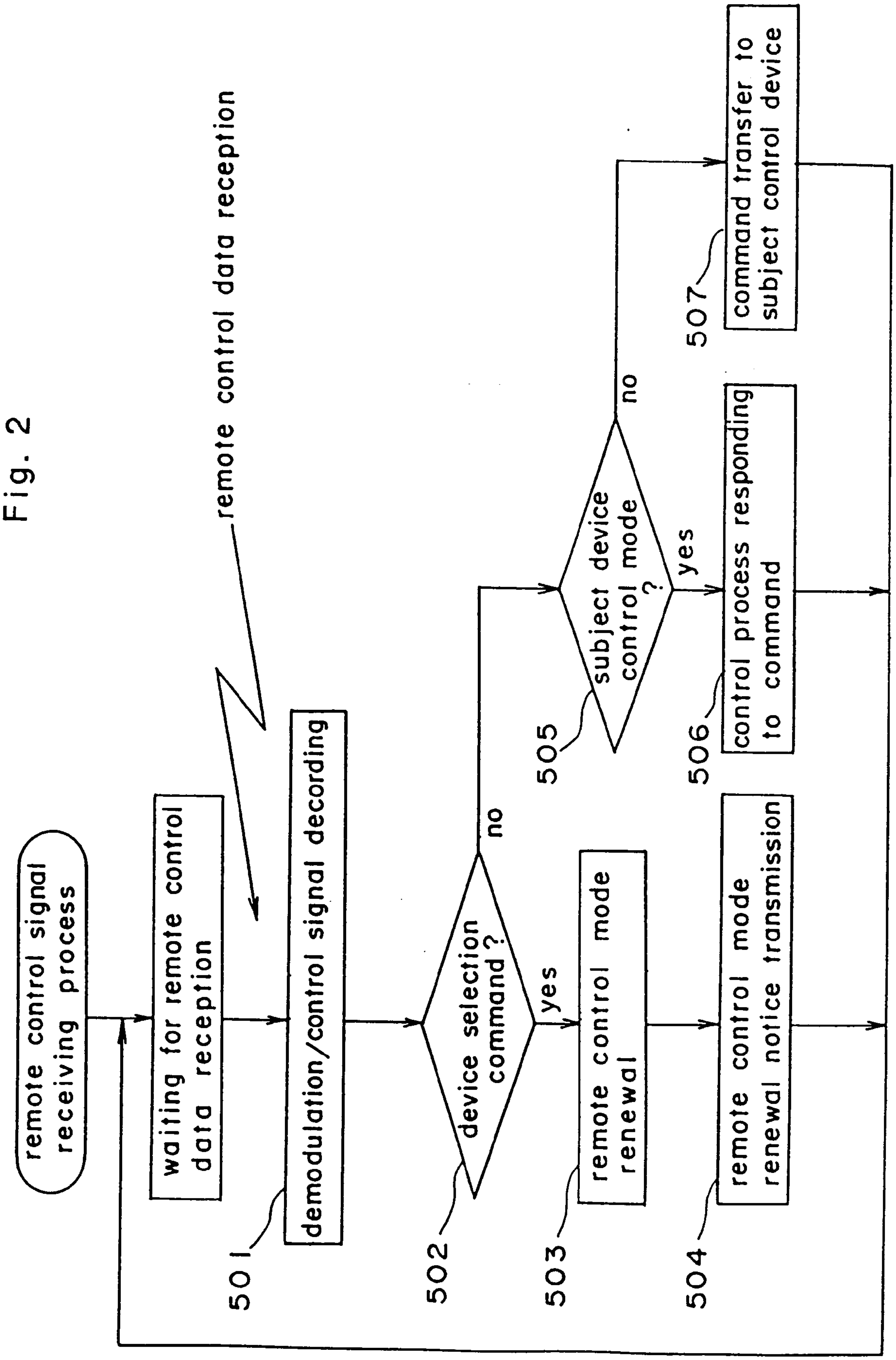
remote control signal receiving process
waiting for remote control data reception
remote control data reception
501
demodulation/control signal decording
502
device selection command ?
yes
no
503
remote control mode renewal
504
remote control mode renewal notice transmission
505
subject device control mode ?
yes
no
506
control process responding to command
507
command transfer to subject control device

Fig. 3

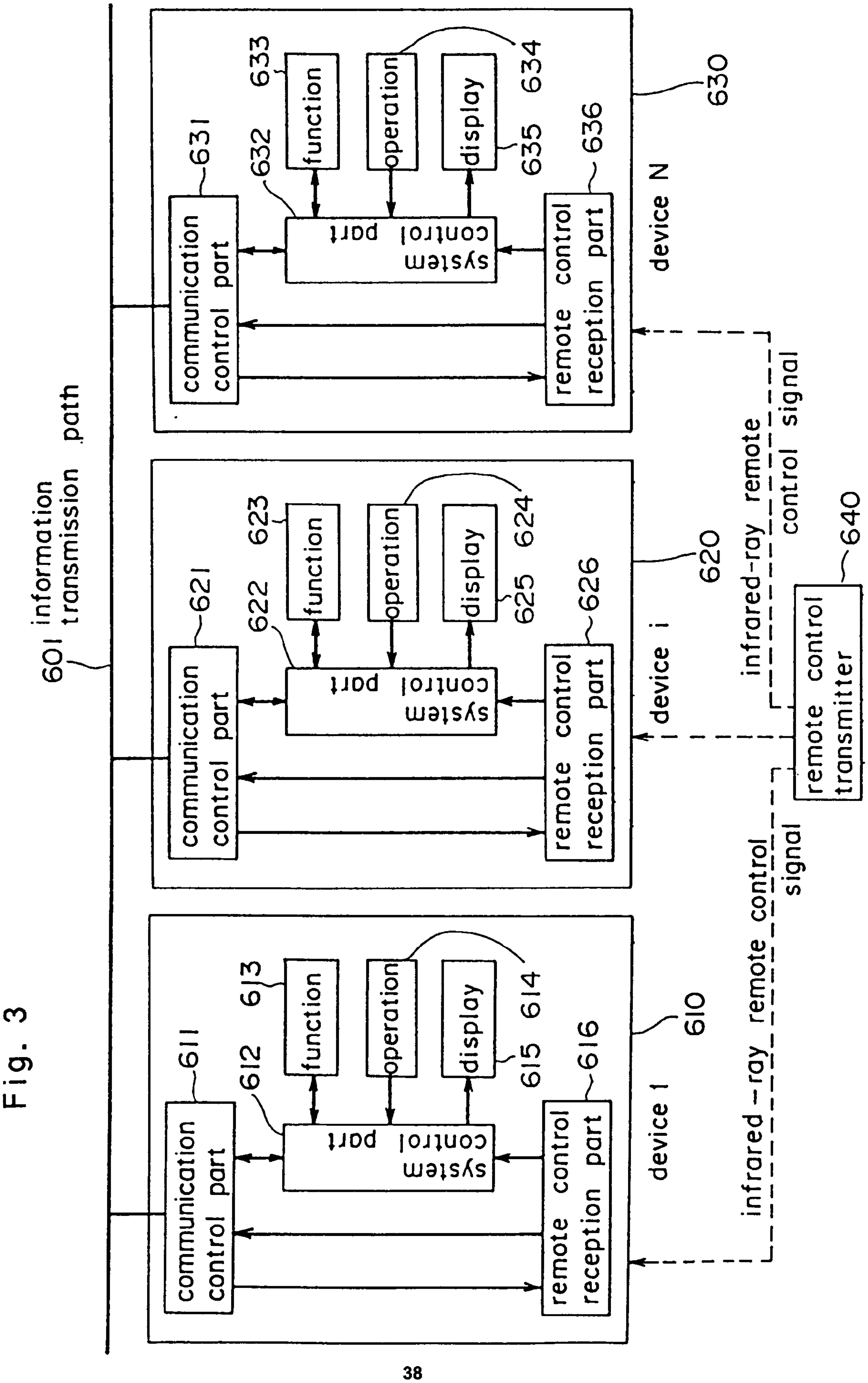
601 information transmission path
device 1
610
communication control part
611
system control part
612
function
613
operation
614
display
615
remote control reception part
616
device i
620
communication control part
621
system control part
622
function
623
operation
624
display
625
remote control reception part
626
device N
630
communication control part
631
system control part
632
function
633
operation
634
display
635
remote control reception part
636
remote control transmitter
640
infrared-ray remote control signal
infrared-ray remote control signal

Fig. 4 (a)

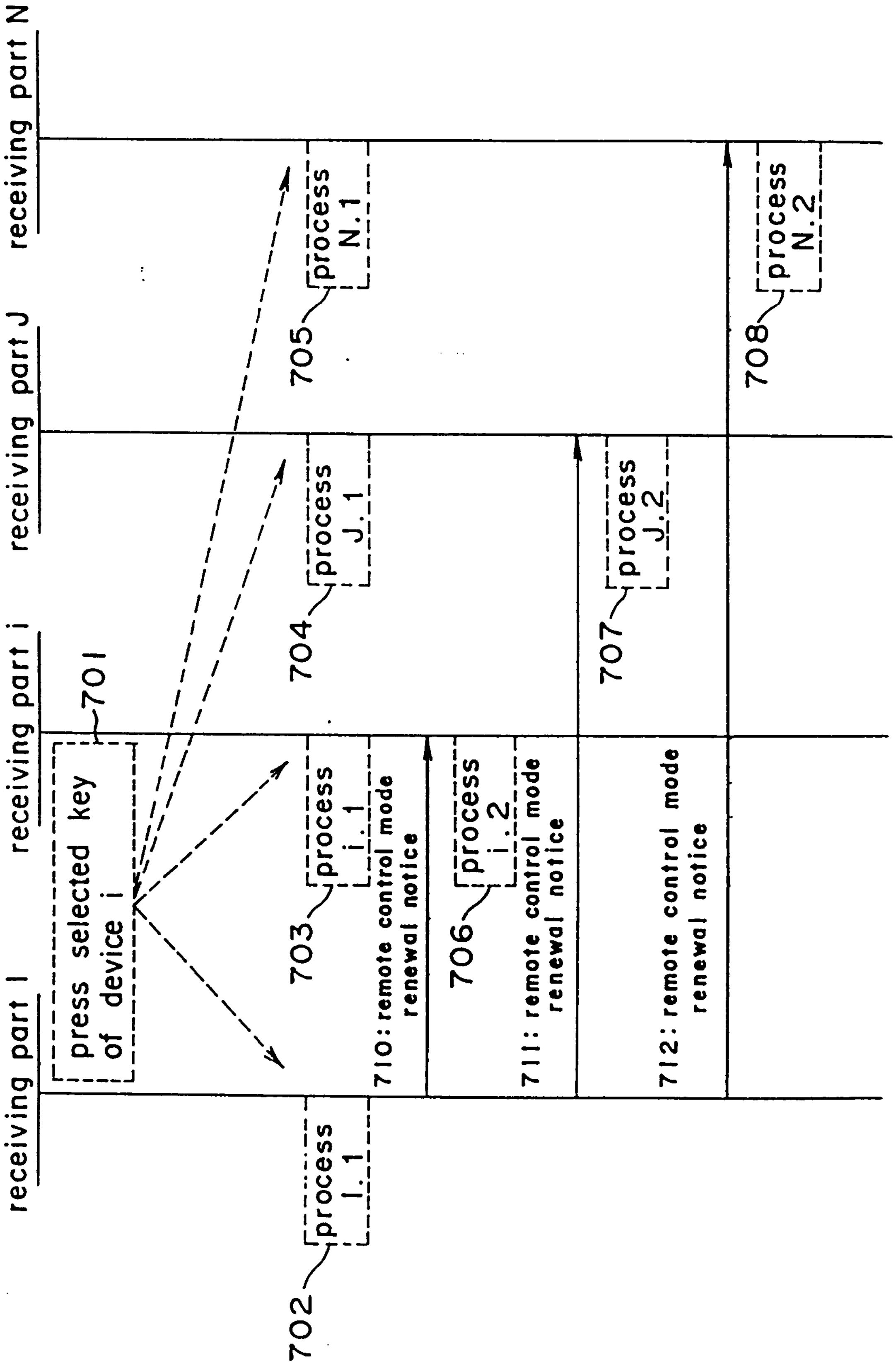
receiving part I
receiving part i
receiving part J
receiving part N
press selected key of device i
701
702
process I.1
703
process i.1
704
process J.1
705
process N.1
710: remote control mode renewal notice
706
process i.2
711: remote control mode renewal notice
707
process J.2
712: remote control mode renewal notice
708
process N.2

Fig. 4 (b)

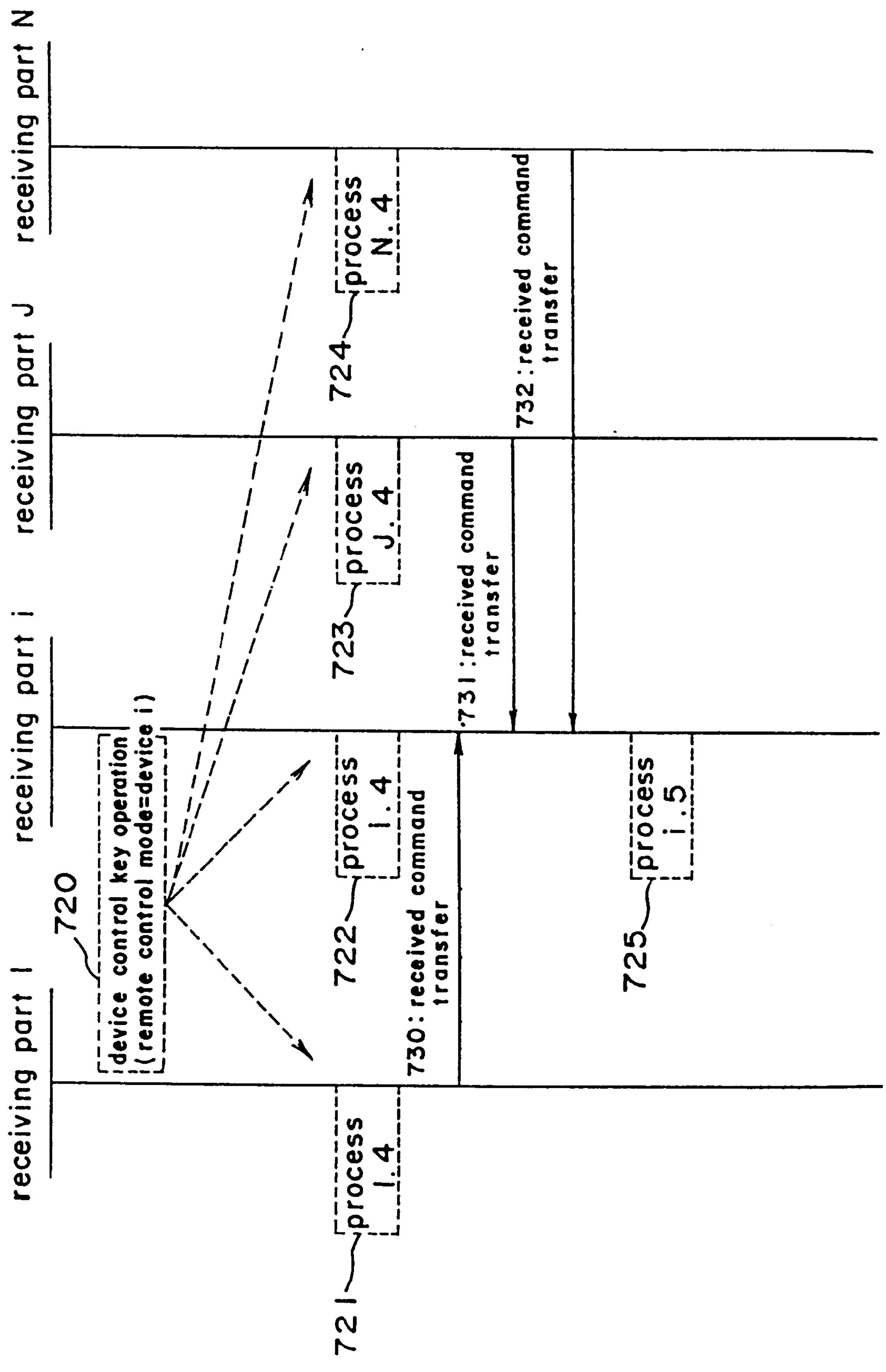
receiving part I
receiving part i
receiving part J
receiving part N
720
device control key operation
(remote control mode=device i)
721
process
I.4
722
process
I.4
723
process
J.4
724
process
N.4
725
process
i.5
730: received command transfer
731: received command transfer
732: received command transfer

Fig. 4 (c)

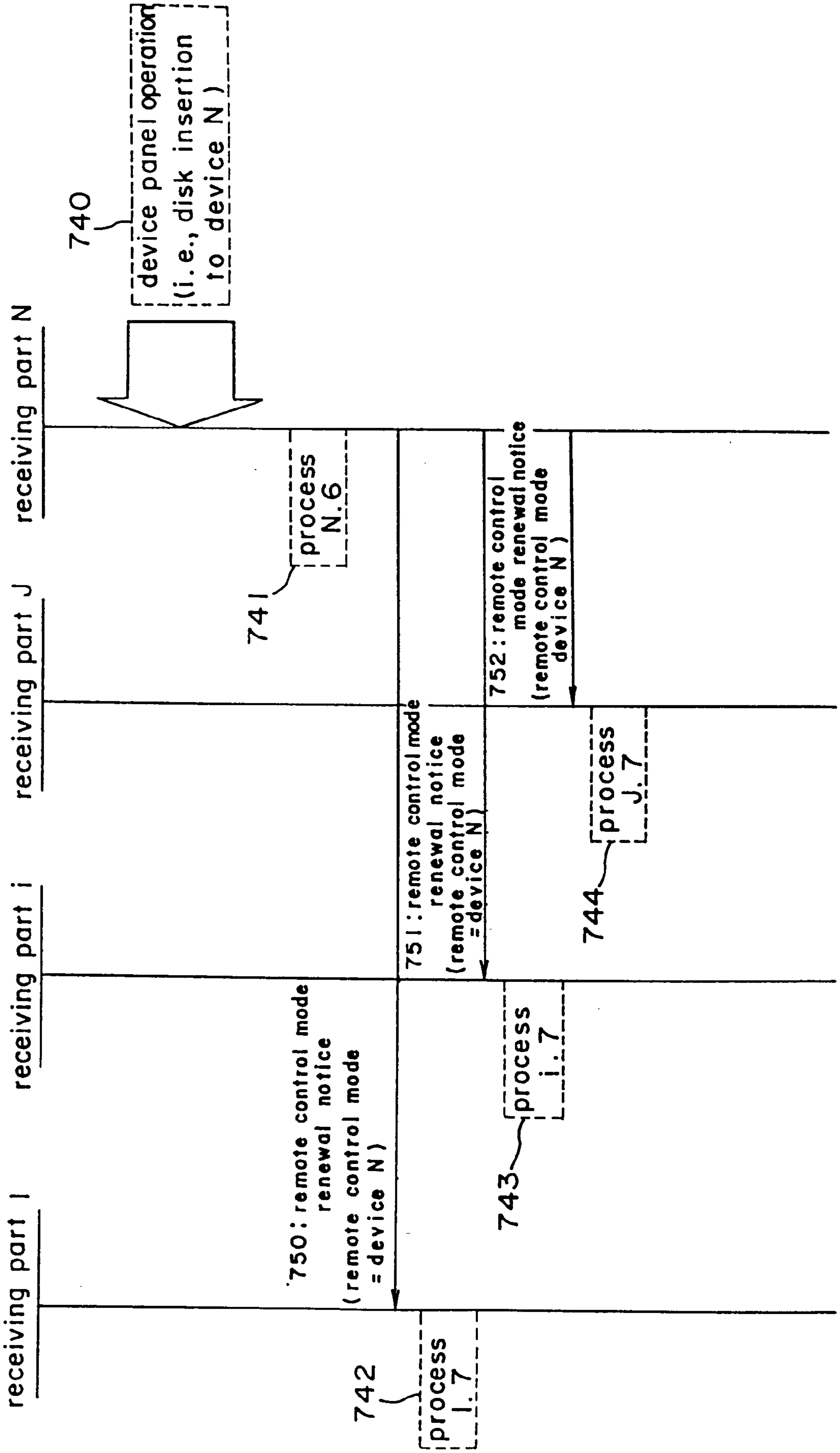
receiving part N
receiving part J
receiving part i
receiving part I
740
device panel operation (i.e., disk insertion to device N)
741
process N.6
750: remote control mode renewal notice (remote control mode = device N)
751: remote control mode renewal notice (remote control mode = device N)
752: remote control mode renewal notice (remote control mode device N)
742
process I.7
743
process i.7
744
process J.7

Fig. 5

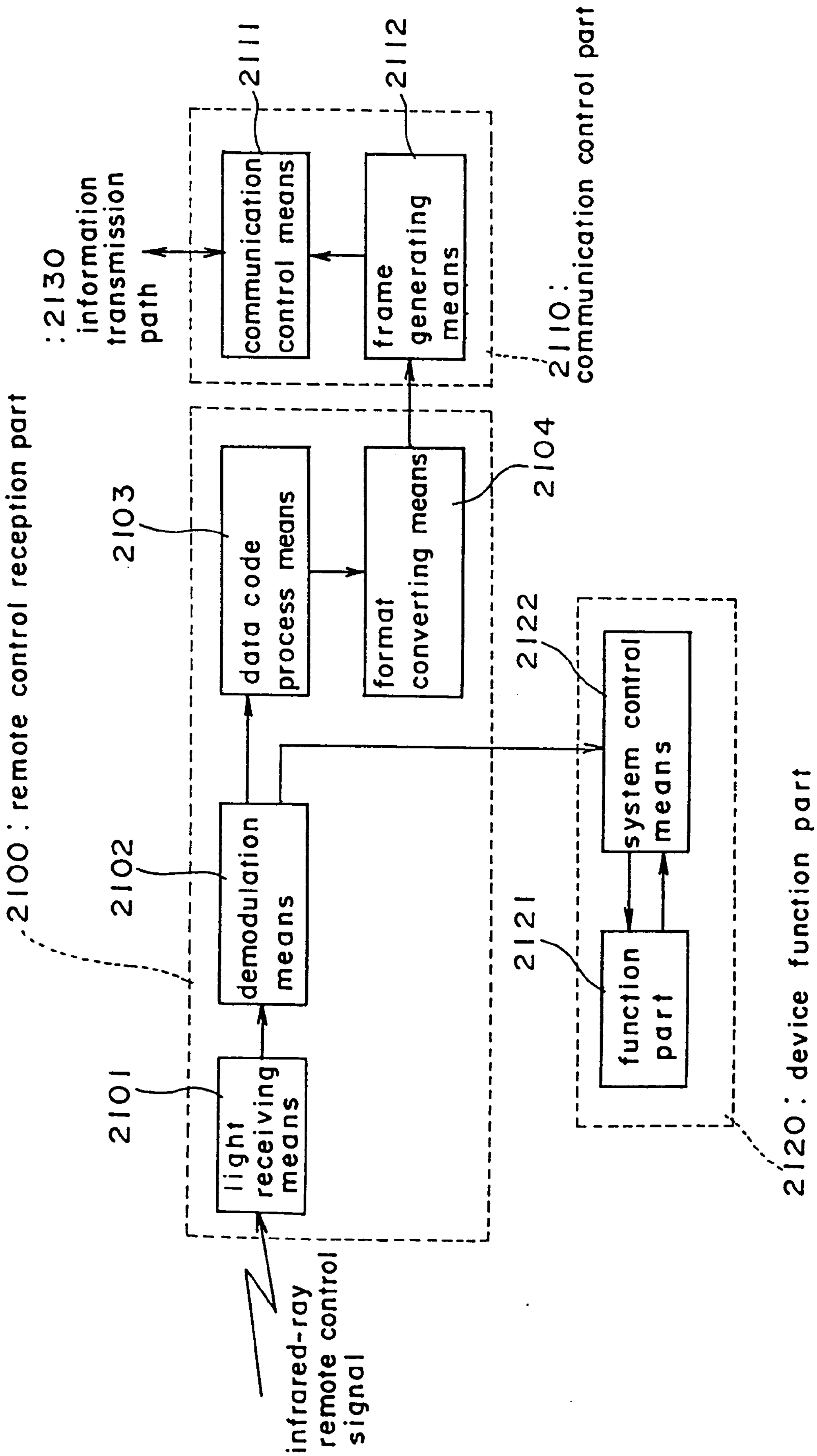
2100 : remote control reception part
2101
light receiving means
2102
demodulation means
2103
data code process means
2104
format converting means
2110 : communication control part
2111
communication control means
2112
frame generating means
: 2130 information transmission path
2120 : device function part
2121
function part
2122
system control means
infrared-ray remote control signal

Fig. 6

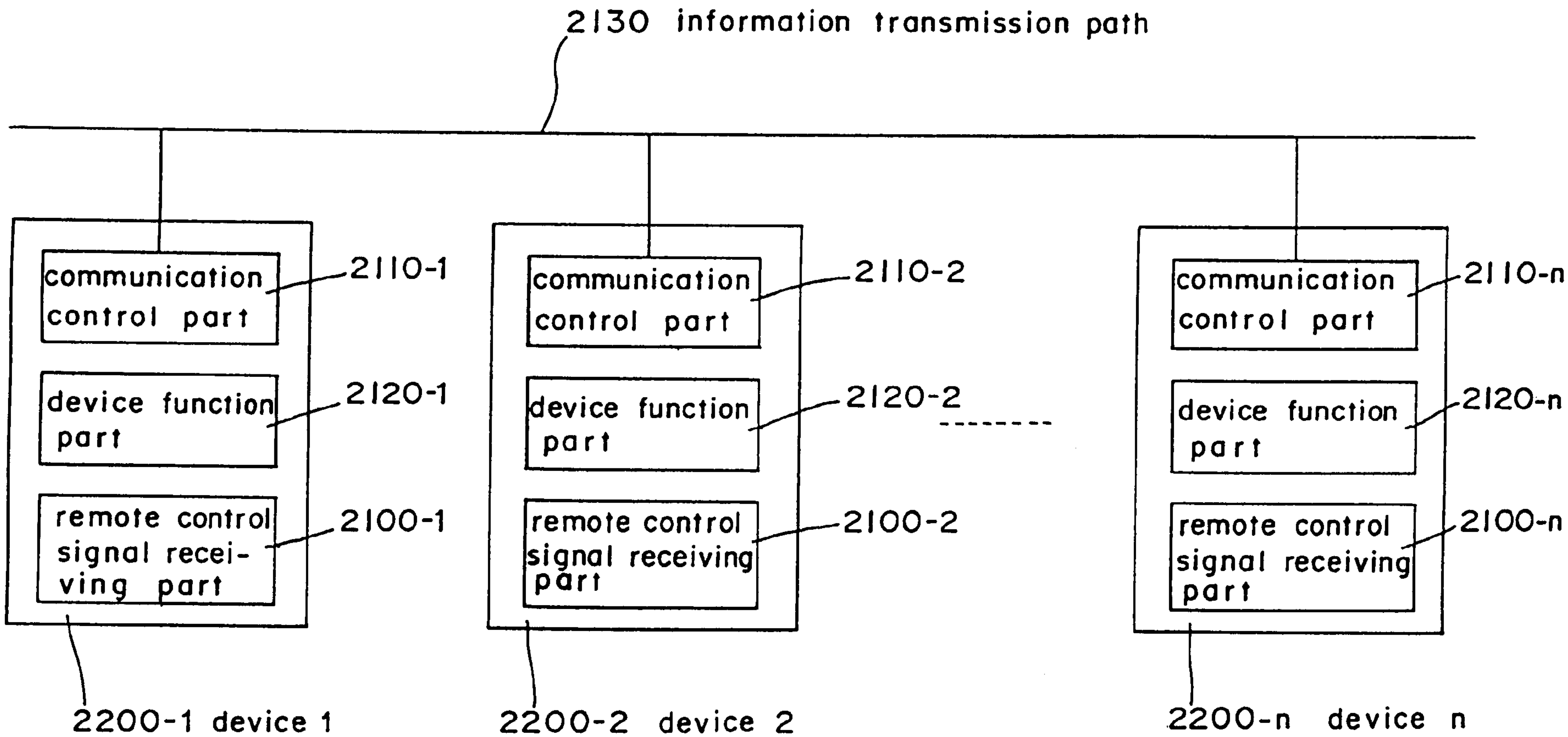
2130 information transmission path
communication control part
device function part
remote control signal recei-ving part
2110-1
2120-1
2100-1
2200-1 device 1
communication control part
device function part
remote control signal receiving part
2110-2
2120-2
2100-2
2200-2 device 2
communication control part
device function part
remote control signal receiving part
2110-n
2120-n
2100-n
2200-n device n

Fig. 7

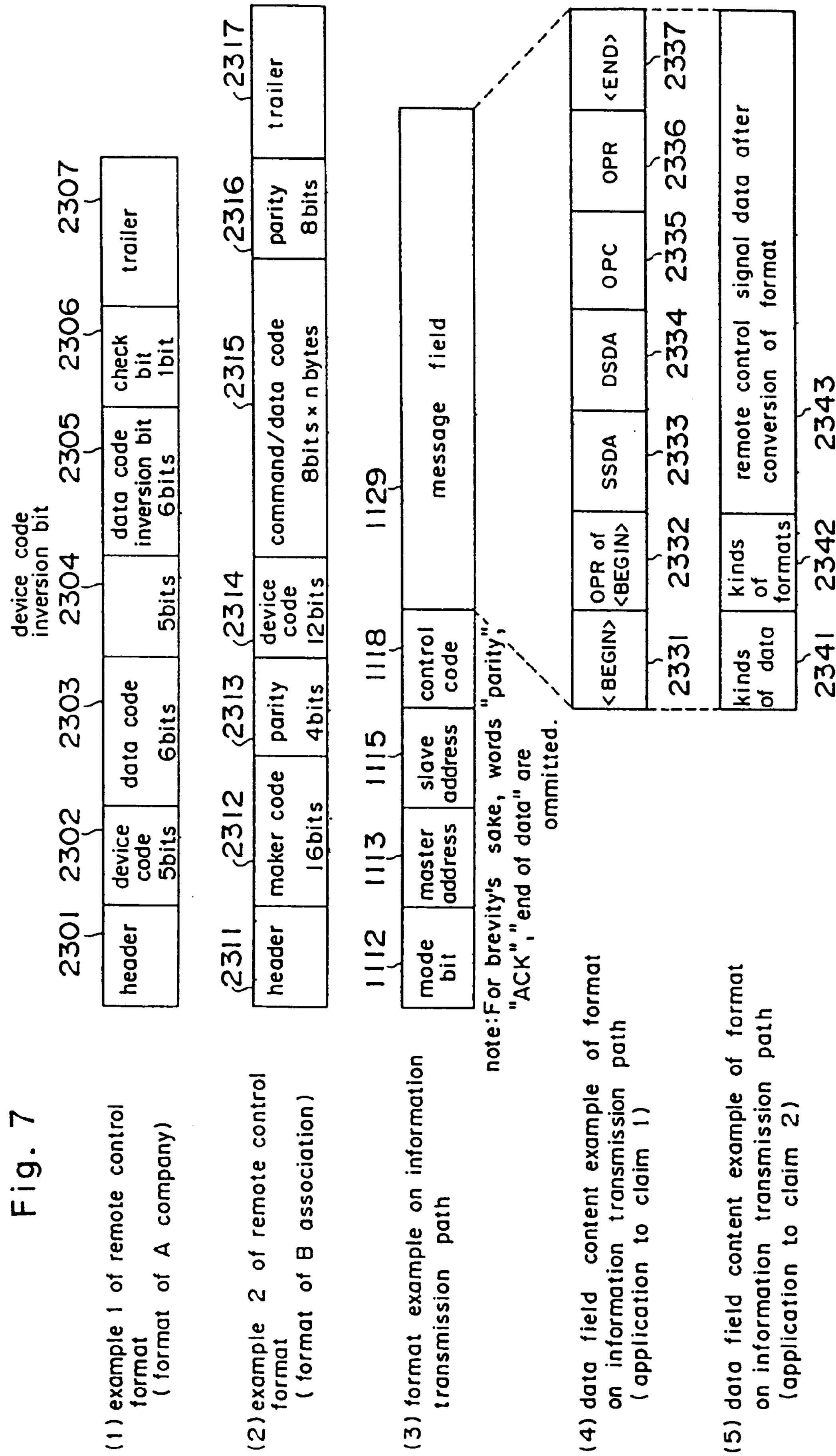
(1) example 1 of remote control format (format of A company)
2301 header
2302 device code 5bits
2303 data code 6bits
2304 device code inversion bit 5bits
2305 data code inversion bit 6bits
2306 check bit 1bit
2307 trailer
(2) example 2 of remote control format (format of B association)
2311 header
2312 maker code 16bits
2313 parity 4bits
2314 device code 12bits
2315 command/data code 8bits × n bytes
2316 parity 8bits
2317 trailer
(3) format example on information transmission path
1112 mode bit
1113 master address
1115 slave address
1118 control code
1129 message field
note: For brevity's sake, words "parity", "ACK", "end of data" are ommitted.
(4) data field content example of format on information transmission path (application to claim 1)
2331 <BEGIN>
2332 OPR of <BEGIN>
2333 SSDA
2334 DSDA
2335 OPC
2336 OPR
2337 <END>
(5) data field content example of format on information transmission path (application to claim 2)
2341 kinds of data
2342 kinds of formats
2343 remote control signal data after conversion of format

Fig. 8

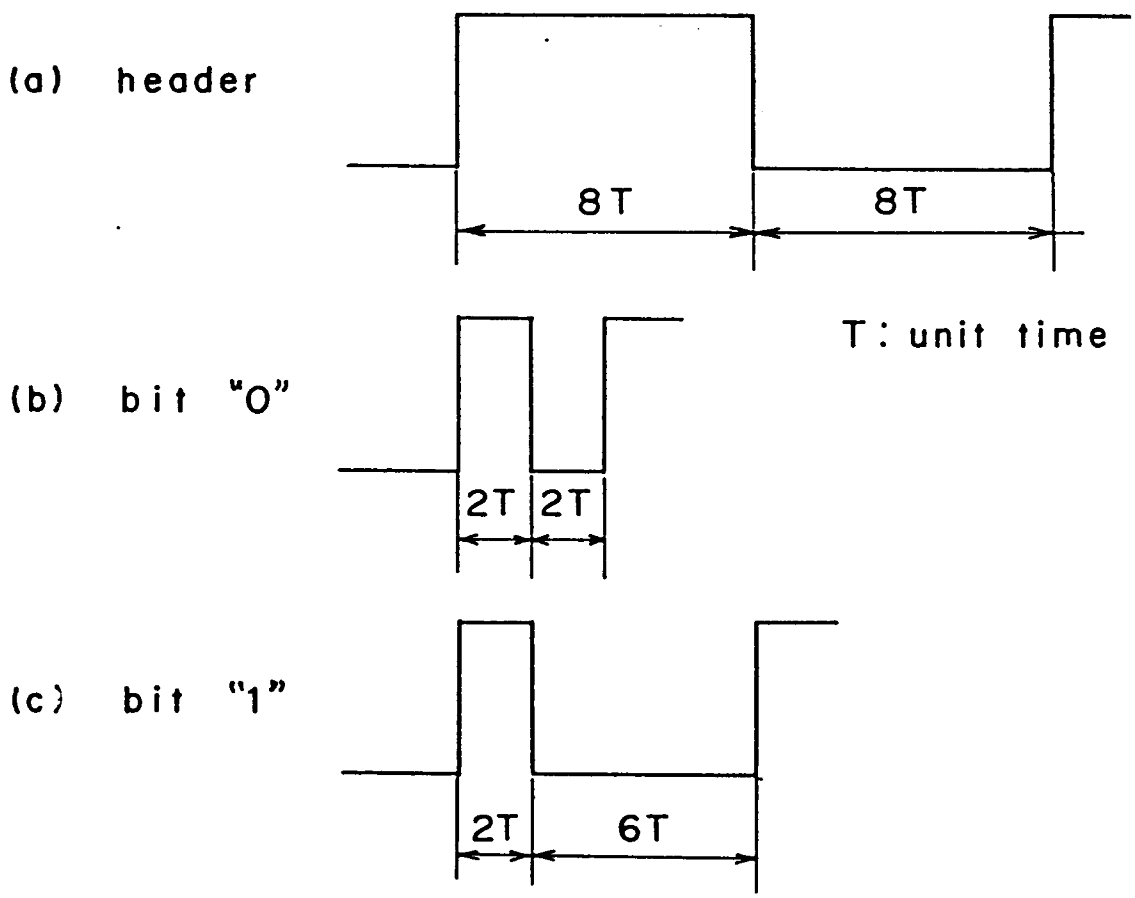

Fig. 9

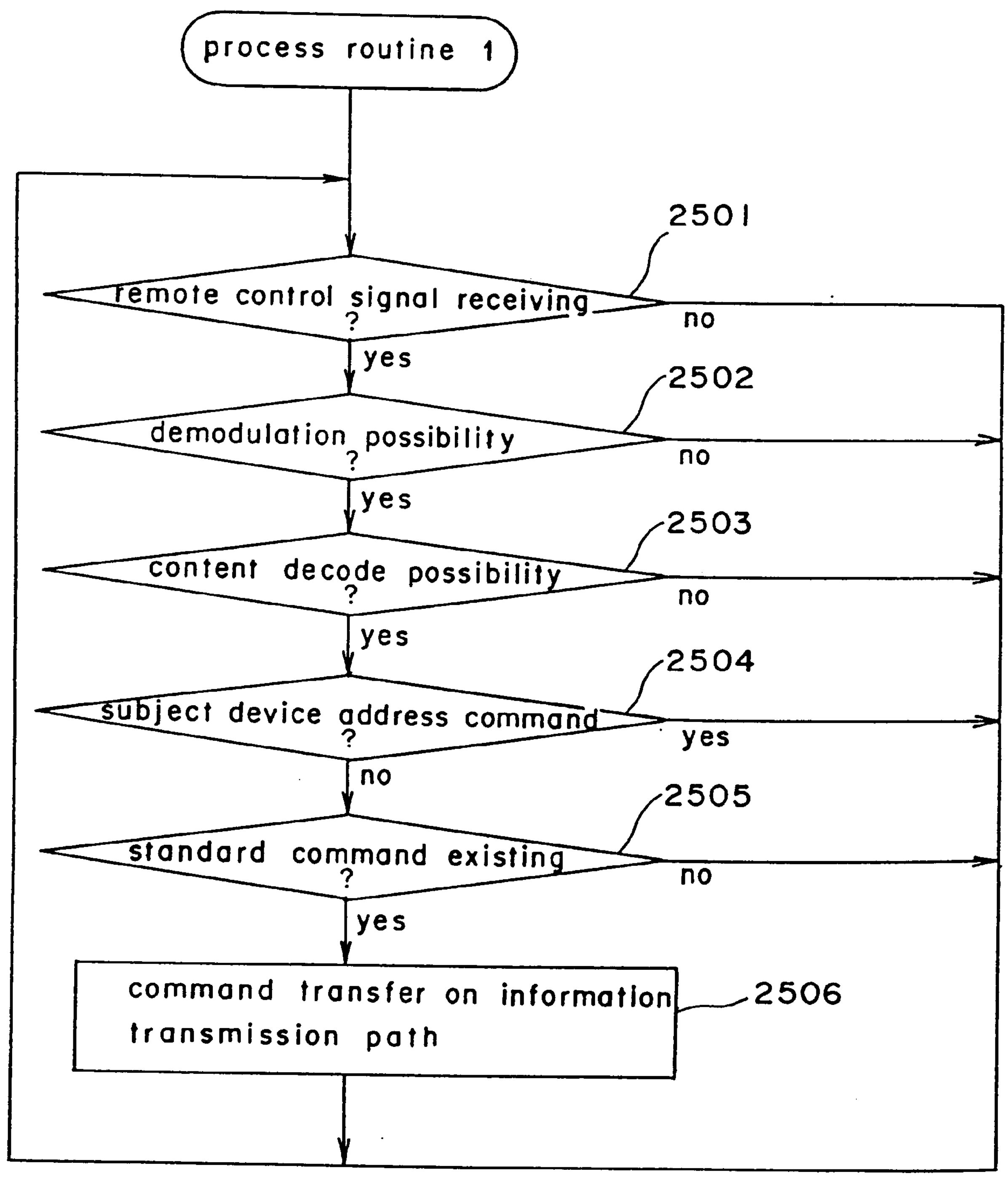
process routine 1
2501
remote control signal receiving ?
no
yes
2502
demodulation possibility ?
no
yes
2503
content decode possibility ?
no
yes
2504
subject device address command ?
yes
no
2505
standard command existing ?
no
yes
command transfer on information transmission path
2506

Fig. 10

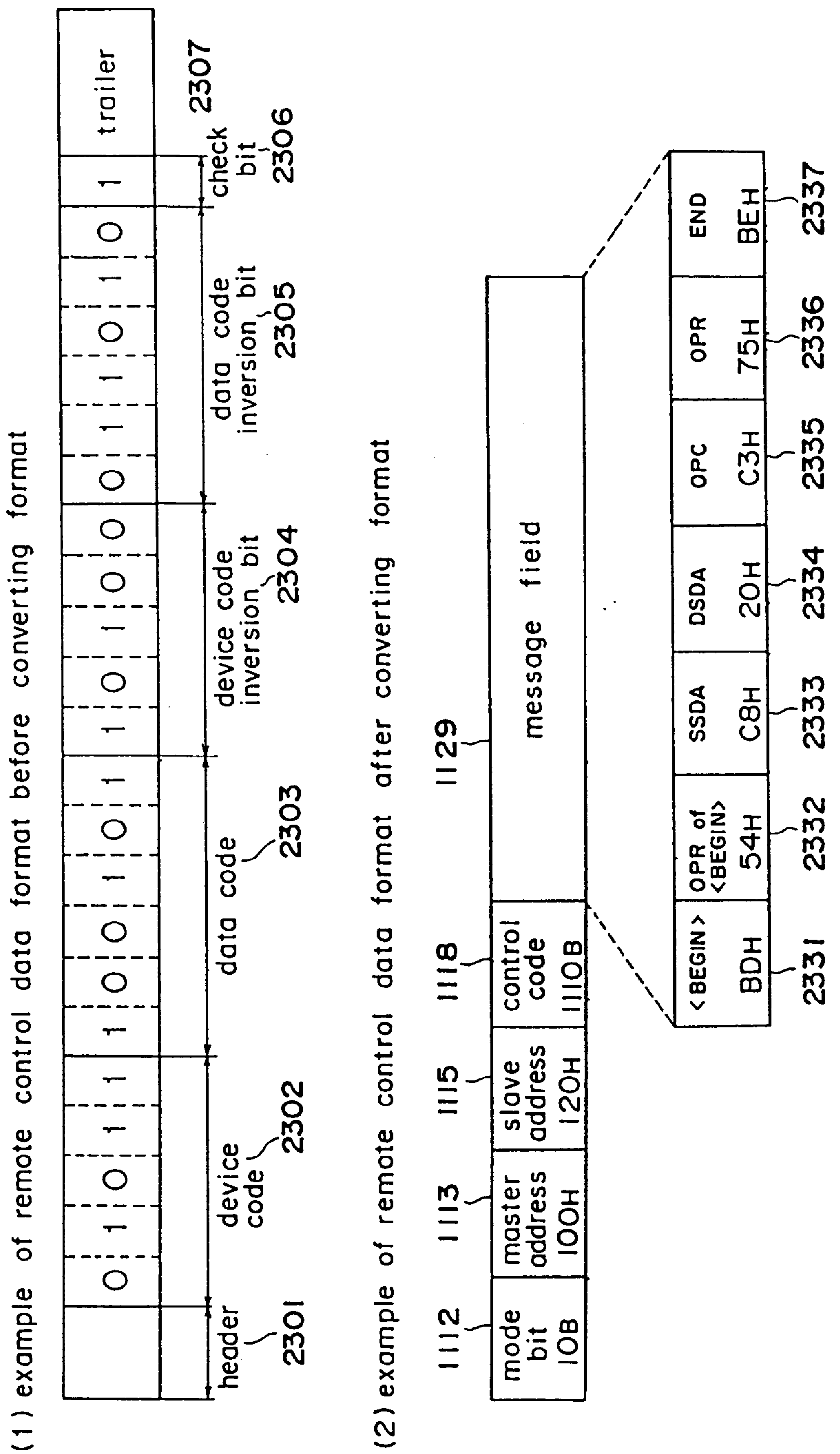
(1) example of remote control data format before converting format
header
2301
0 1 0 1 1
device code
2302
1 0 0 1 0 1
data code
2303
1 0 1 0 0 0
device code inversion bit
2304
0 1 1 0 1 0
data code inversion bit
2305
1
check bit
2306
trailer
2307
(2) example of remote control data format after converting format
1112
mode bit 10B
1113
master address 100H
1115
slave address 120H
1118
control code 1110B
1129
message field
<BEGIN> BDH
2331
OPR of <BEGIN> 54H
2332
SSDA C8H
2333
DSDA 20H
2334
OPC C3H
2335
OPR 75H
2336
END BEH
2337

Fig. 11

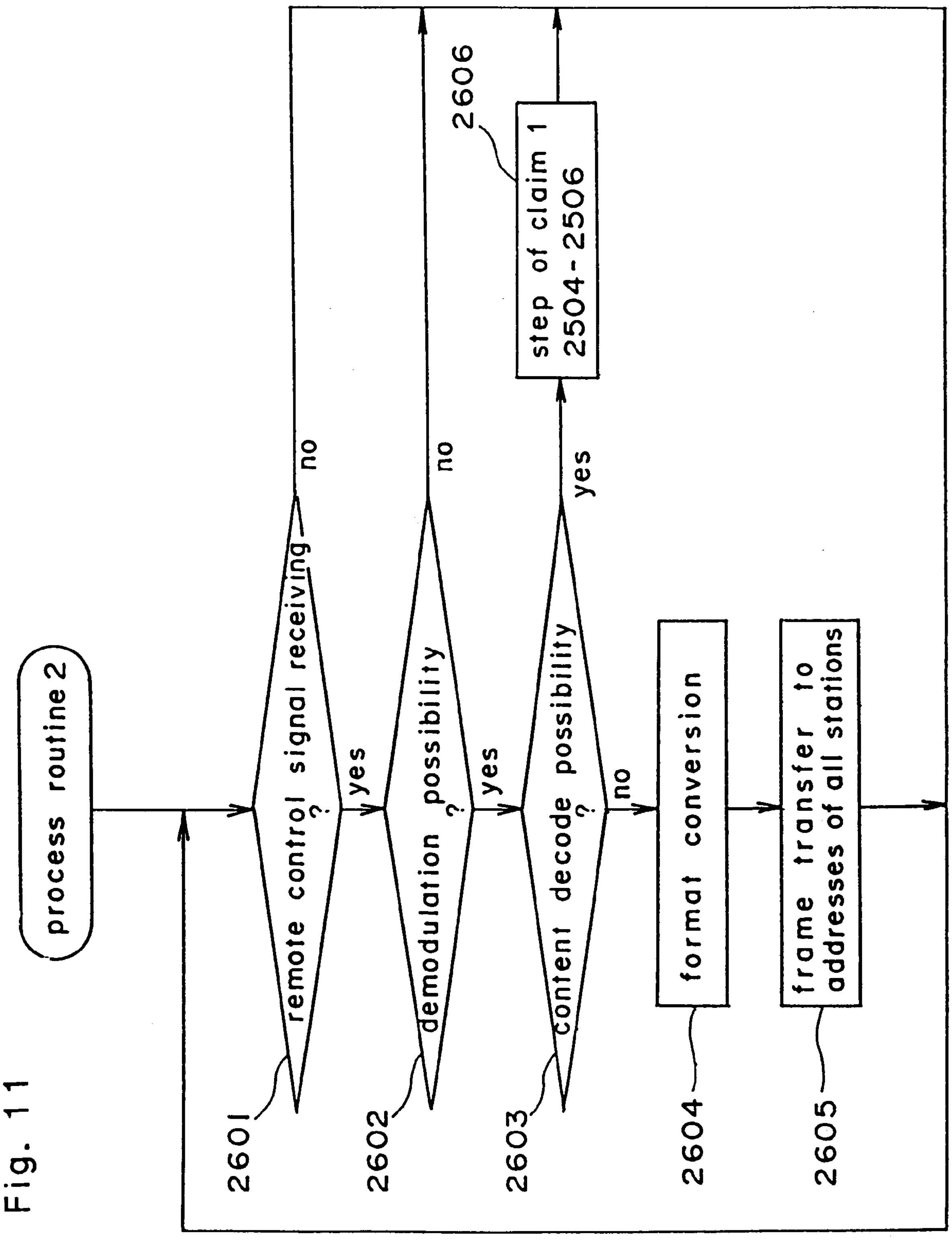
process routine 2
remote control signal receiving ?
2601
yes
no
demodulation possibility ?
2602
yes
no
content decode possibility ?
2603
yes
no
step of claim 1 2504 - 2506
2606
format conversion
2604
frame transfer to addresses of all stations
2605

Fig. 12

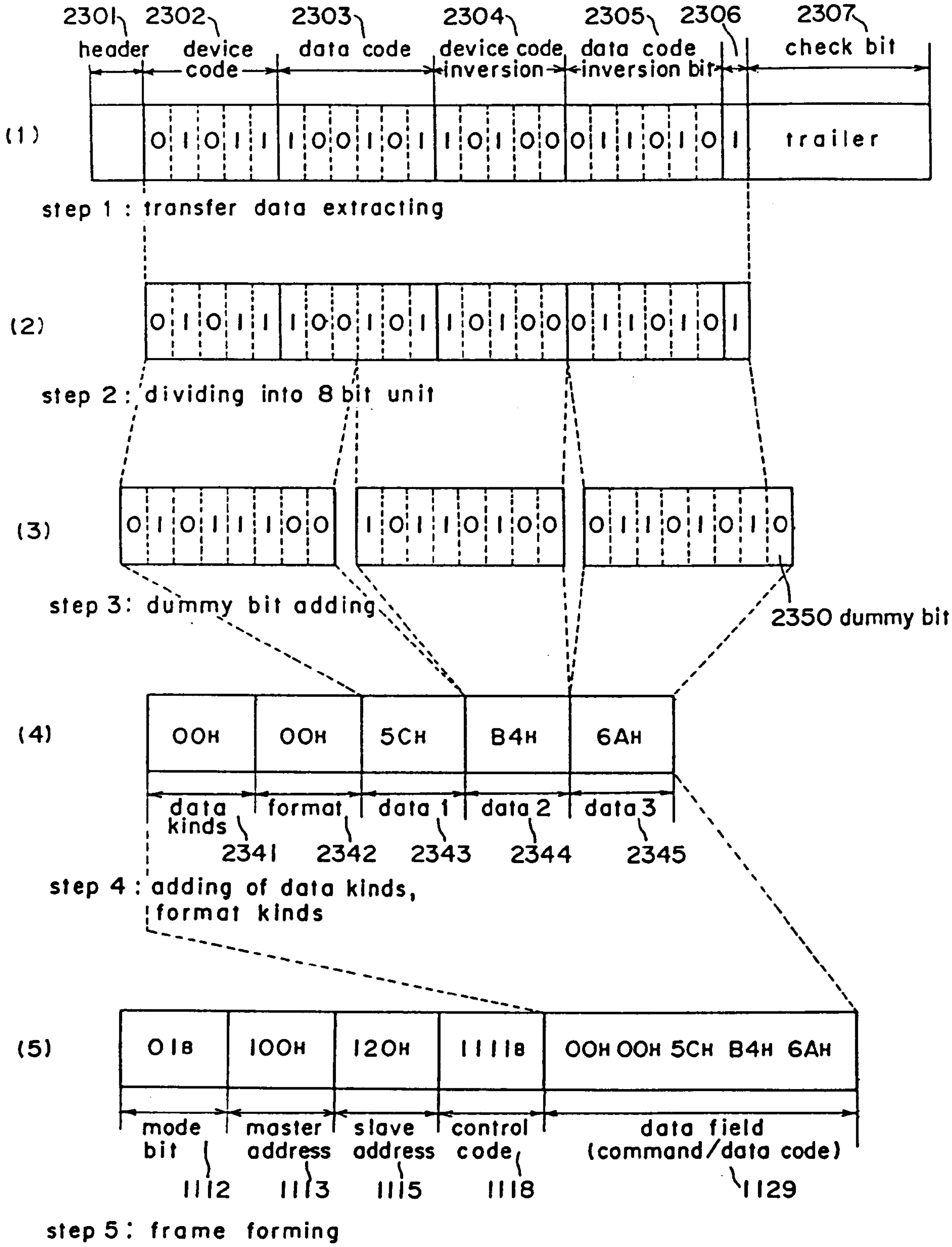


note : For brevity's sake, words "parity", "ACK", "end of data" are omitted.

Fig. 13

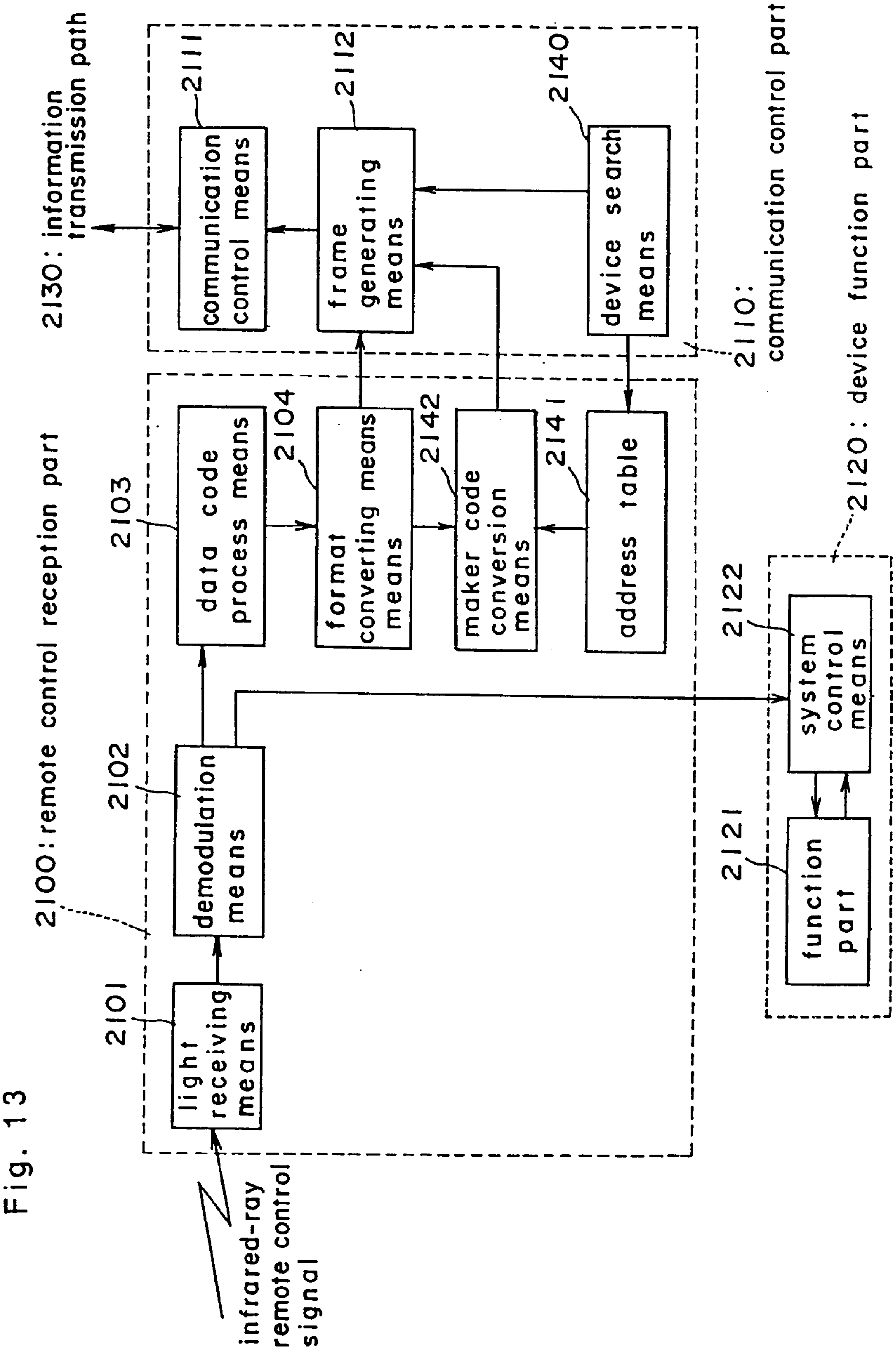
2130: information transmission path
2111
communication control means
2112
frame generating means
2140
device search means
2110: communication control part
2100: remote control reception part
2101
light receiving means
2102
demodulation means
2103
data code process means
2104
format converting means
2142
maker code conversion means
2141
address table
2120: device function part
2122
system control means
2121
function part
infrared-ray remote control signal

Fig. 14

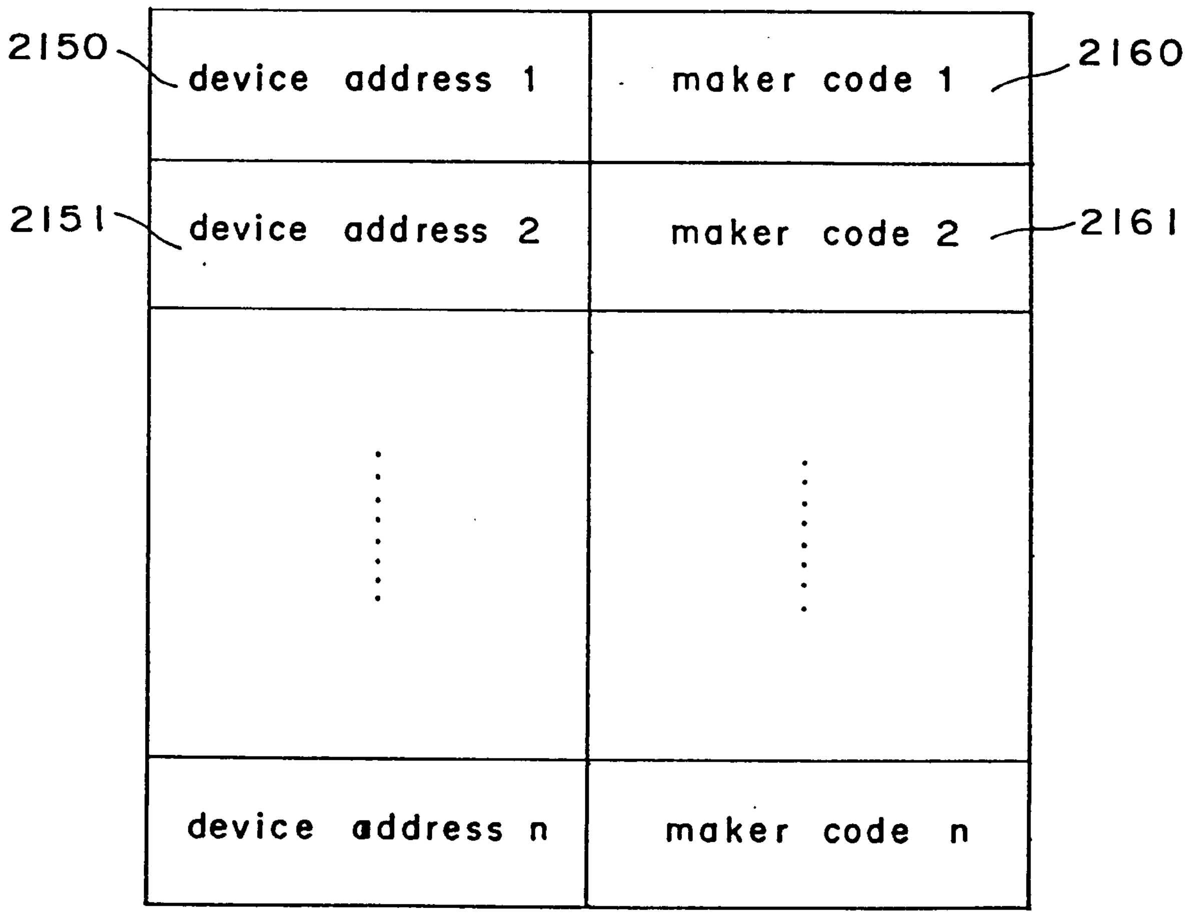


143 address table

Fig. 15

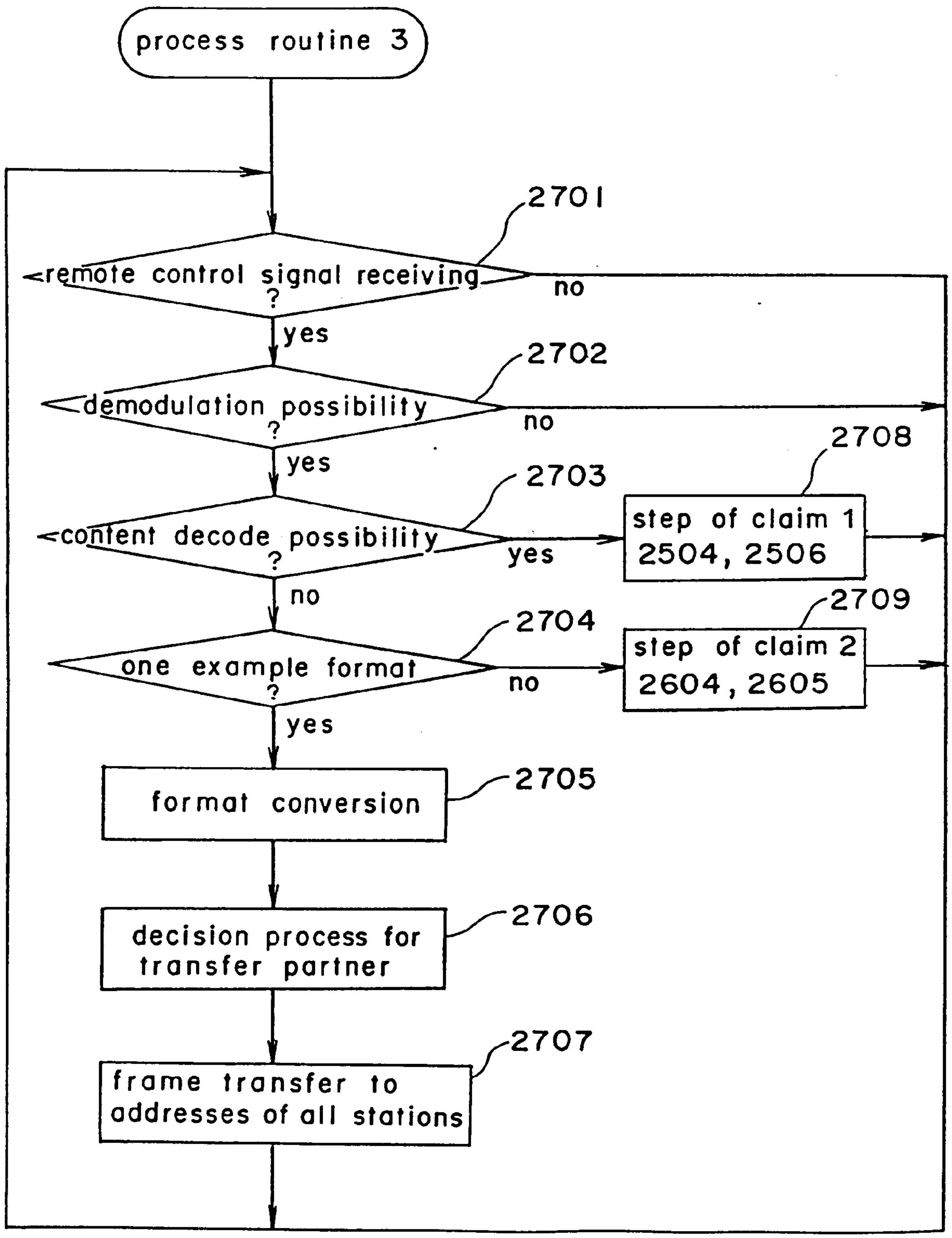
process routine 3
2701
remote control signal receiving ?
no
yes
2702
demodulation possibility ?
no
yes
2703
content decode possibility ?
yes
no
2708
step of claim 1
2504, 2506
2704
one example format ?
no
yes
2709
step of claim 2
2604, 2605
format conversion
2705
decision process for transfer partner
2706
frame transfer to addresses of all stations
2707

Fig. 16

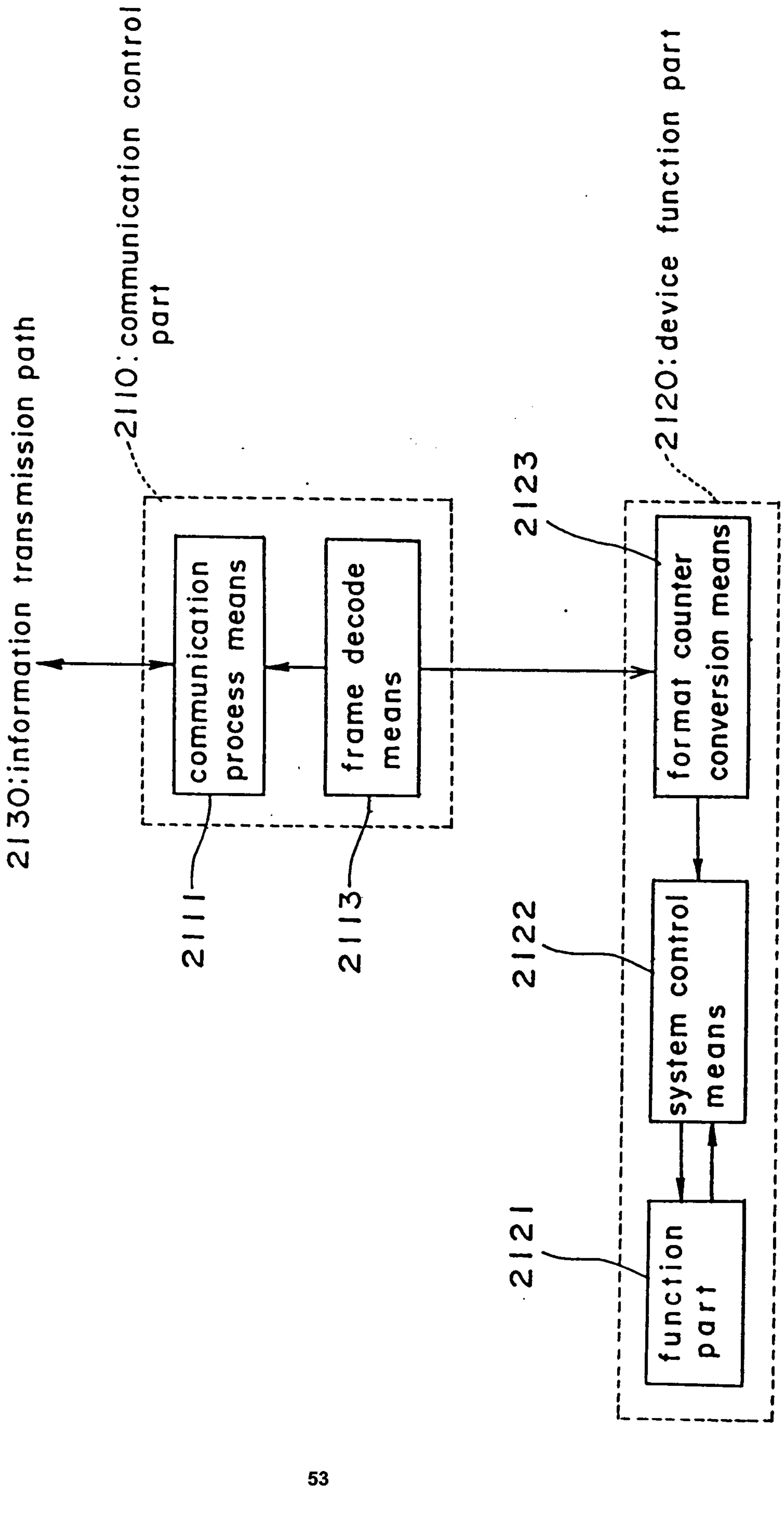
2130:information transmission path
2110: communication control part
communication process means
frame decode means
2111
2113
2123
2120:device function part
format counter conversion means
system control means
function part
2122
2121

Fig. 17

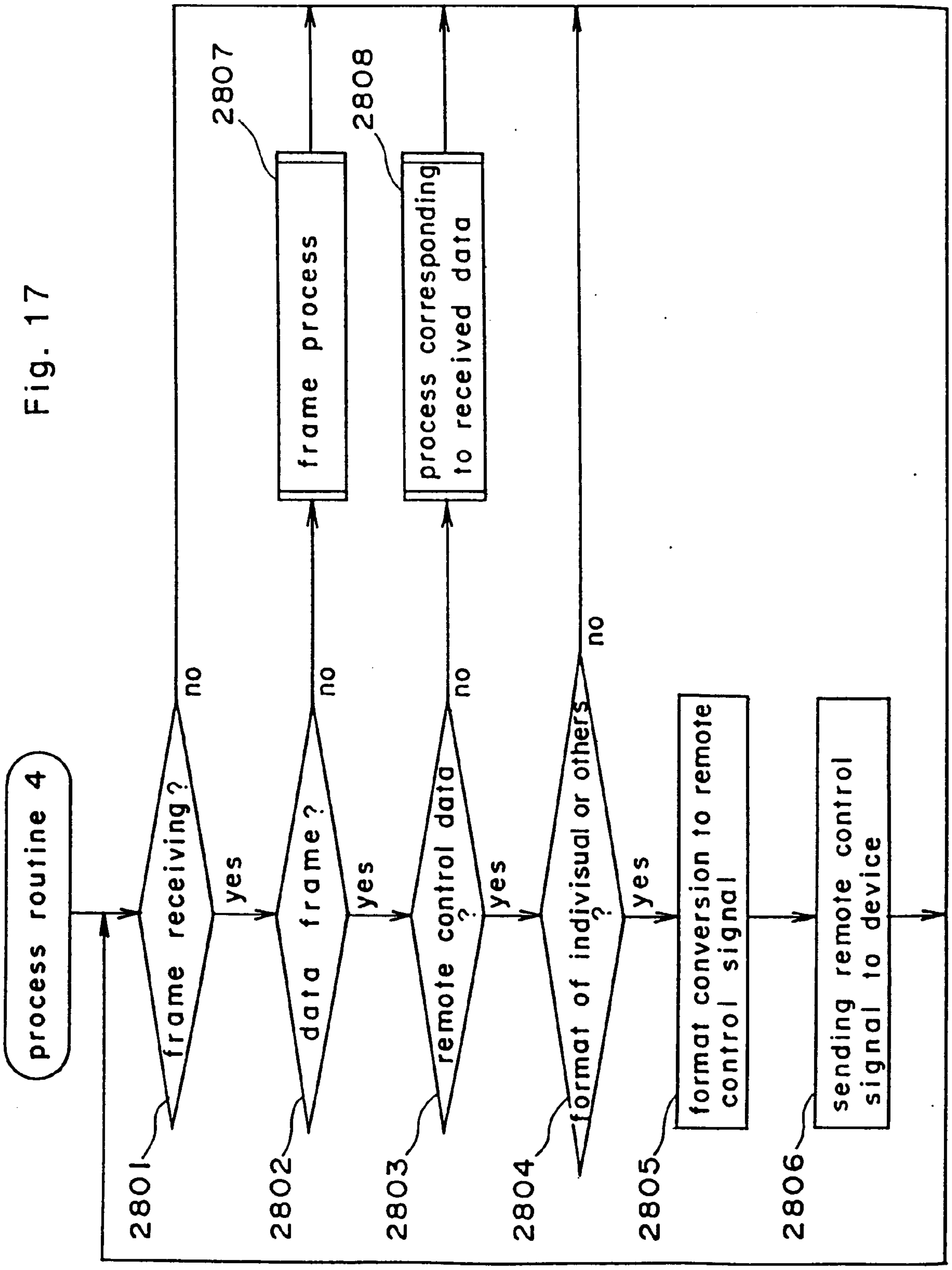
process routine 4
frame receiving?
yes
no
data frame?
yes
no
remote control data ?
yes
no
format of indivisual or others ?
yes
no
format conversion to remote control signal
sending remote control signal to device
frame process
process corresponding to received data
2801
2802
2803
2804
2805
2806
2807
2808

Fig. 18

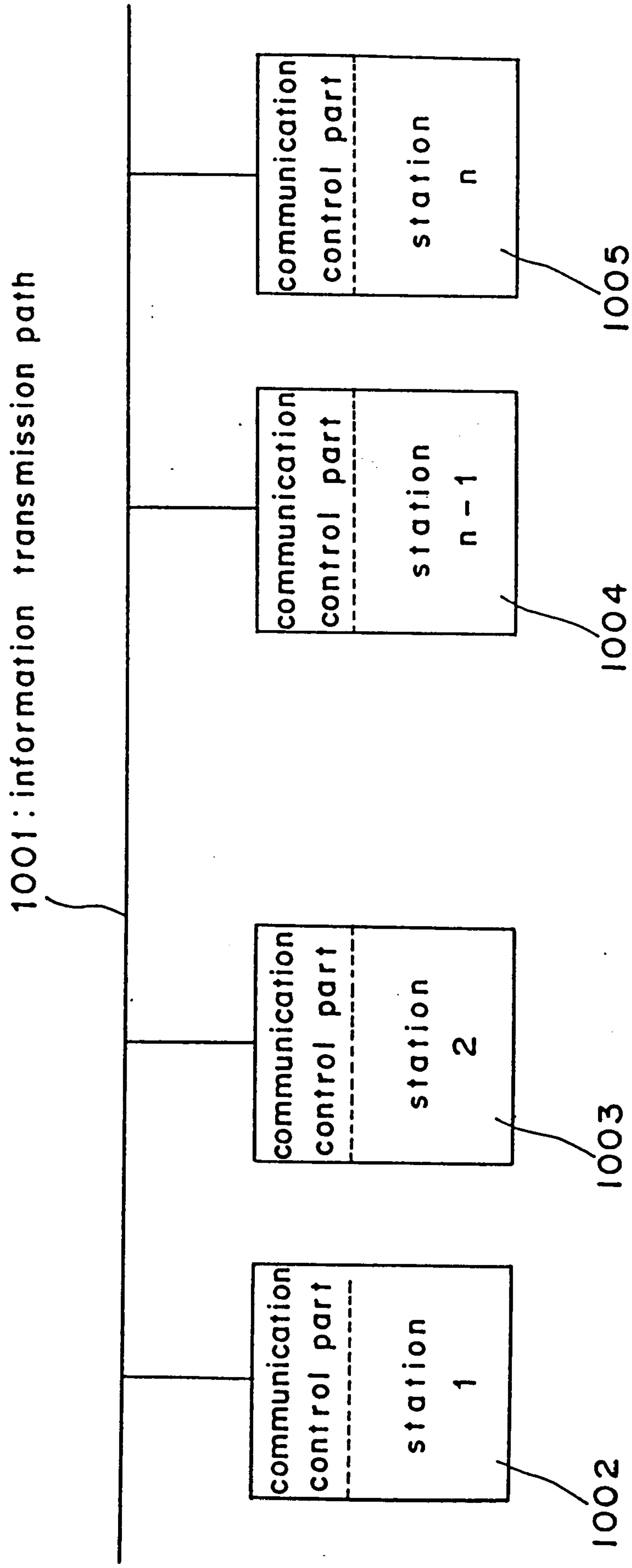
1001 : information transmission path
communication control part
station 1
1002
communication control part
station 2
1003
communication control part
station n - 1
1004
communication control part
station n
1005

Fig. 19

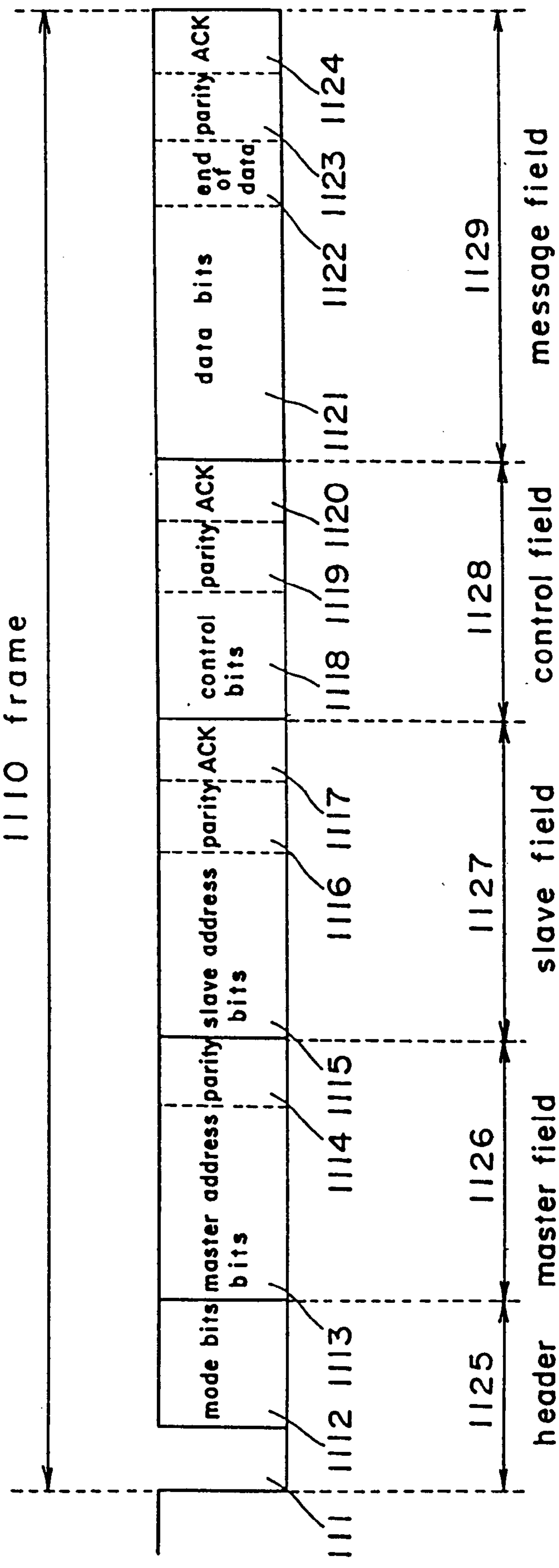
1110 frame
mode bits
master address bits
parity
slave address bits
parity
ACK
control bits
parity
ACK
data bits
end of data
parity
ACK
1111
1112
1113
1114
1115
1116
1117
1118
1119
1120
1121
1122
1123
1124
1125
1126
1127
1128
1129
header
master field
slave field
control field
message field